(19) Europäisches Patentamt
European Patent Office
Office européen des brevets

(11) Veröffentlichungsnummer: **0 003 581**
**B1**

(12) # EUROPÄISCHE PATENTSCHRIFT

(45) Veröffentlichungstag der Patentschrift: **23.06.82**

(21) Anmeldenummer: **79100327.0**

(22) Anmeldetag: **05.02.79**

(51) Int. Cl.³: **G 03 C 5/54**, C 09 B 29/00, C 07 D 275/04

(54) **Fotografisches Farbdiffusionsübertragungsverfahren.**

(30) Priorität: **14.02.78 DE 2806196**

(43) Veröffentlichungstag der Anmeldung: **22.08.79 Patentblatt 79/17**

(45) Bekanntmachung des Hinweises auf die Patenterteilung: **23.06.82 Patentblatt 82/25**

(84) Benannte Vertragsstaaten: **BE DE FR GB**

(56) Entgegenhaltungen:
**DE - A - 1 772 929**
**DE - A - 2 402 900**
**FR - A - 1 562 205**
**US - A - 3 932 381**

(73) Patentinhaber: **AGFA-GEVAERT Aktiengesellschaft**
**D-5090 Leverkusen 1 (DE)**

(72) Erfinder: **Püschel, Walter, Dr.**
**Berta-von-Suttner-Strasse 54**
**D-5090 Leverkusen 1 (DE)**
Erfinder: **Vetter, Hans, Dr.**
**Gerstenkamp 19**
**D-5000 Köln 80 (DE)**
Erfinder: **Marx, Paul, Dr.**
**Nauener Strasse 25**
**D-5090 Leverkusen 1 (DE)**

**EP 0 003 581 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Fotografisches Farbdiffusionsübertragsverfahren

Die Erfindung betrifft ein Verfahren zur Herstellung farbfotografischer Bilder nach dem Farbstoffdiffusionsübertragungsverfahren sowie ein hierfür geeignetes fotografisches Material, das neue diffusionsfeste, farbgebende Verbindungen enthält, die diffundierende blaugrüne oder purpurne Naphthsultamazofarbstoffe in Freiheit setzen.

Unter den bisher bekannt geworden Verfahren zur Herstellung farbiger fotografischer Bilder nach dem Farbdiffusionsübertragungsverfahren, gewinnen in jüngster Zeit zunehmend solche an Bedeutung, die auf der Verwendung diffusionsfest eingelagerter farbgebender Verbindungen beruhen, aus denen bei der Entwicklung diffundierende Farbstoffe oder Farbstoffvorläuferprodukte bildmäßig abgespalten und auf eine Bildempfangsschicht übertragen werden.

Zu den hierfür geeigneten, farbgebenden Verbindungen sind beispielsweise die in der DE-PS 1 095 115 beschreibenen nichtdiffundierenden Farbkuppler zu zählen, die bei der Entwicklung als Folge einer Reaktion mit dem Oxidationsprodukt einer aus einem primären aromatischen Amin bestehenden Farbentwicklerverbindung, einen vorgebildeten oder bei der Farbkupplung erzeugten Farbstoff in diffundierender Form in Freiheit setzen. Die Auswahl der benötigten Entwicklerverbindung beschränkt sich hierbei naturgemäß auf Farbentwickler.

Weiterhin ist hierbei auf die in der DE-OS 1 930 215 beschriebenen nichtdiffundierenden farbgebenden Verbindungen hinzuweisen, die über eine spaltbare Hydrazongruppierung einen vorgebildeten latent diffusionsfähigen Farbstoffrest mit einem diffusionsfest machenden Rest verknüpft enthalten. Diese Verbindungen sind nicht als Farbkuppler zu bezeichnen, und es hat sich auch erwiesen, daß die Auswahl der Entwicklerverbindungen, die zur Freisetzung des diffundierenden Farbstofrestes erforderlich sind, keineswegs auf die üblichen Farbentwickler beschränkt ist, sondern daß auch Schwarz-Weißentwickler z.B. Brenzkatechine sehr gut brauchbar sind.

In der DE-OS 1 772 929 sind ferner nichtdiffundierende farbige Verbindungen mit einer besonderen Gruppierung beschrieben, die bei der Entwicklung eine oxidative Ringschlußreaktion eingehen und hierbei einen vorgebildeten Farbstoffrest in diffundierender Form in Freiheit setzen. Die dort vorgestellten Verbindungen lassen sich in zwei Gruppen einteilen. Die Verbindungen der einen Gruppe benötigen zur Entwicklung eine übliche Farbentwicklerverbindung, mit deren Oxidationsprodukt sie kuppeln und in einer nachfolgenden Ringschlußreaktion den vorgebildeten Farbstoffrest in diffundierender Form in Freiheit setzen. Die Verbindungen der anderen Gruppe stellen selbst Silberhalogenidentwicklungsmittel dar und vermögen daher auch in Abwesenheit weiterer Entwicklerverbindungen in der oxidierten Form die vorerwähnte Ringschlußreaktion unter Freisetzung der diffundierenden Farbstoffe einzugehen.

Schließlich seien an dieser Stelle noch erwähnt die nicht-diffundierenden farbgebenden Verbindungen der DE-OS 2 242 762. Hierbei handelt es sich um Sulfonamidophenole und Sulfonamidoaniline, die nach der bei der Entwicklung erfolgten Oxidation unter dem Einfluß des Entwickleralkalis unter Freisetzung diffundierender Farbstoffe mit einer freien Sulfamoylgruppe ($-SO_2NH_2$) gespalten werden.

Die obenerwähnten farbgebenden Verbindungen arbeiten ausnahmslos negativ, d.h. die bildmäßige Verteilung des freigesetzten diffundierenden Farbstoffes entsteht bei Verwendung üblicher (negativ arbeitender) Silberhalogenidemulsionen in Übereinstimmung mit dem bei der Entwicklung erzeugten negativen Silberbild. Zur Erzeugung positiver Farbstoffbilder bedarf es daher der Verwendung von direktpositiven Silberhalogenidemulsionen oder andernfalls der Anwendung eines geeigneten Umkehrverfahrens.

Aus DE - OSen 2 402 900 und 2 543 902 sind weiterhin nichtdiffundierende farbgebende Verbindungen bekannt, die zu einer Spaltungsreaktion unter alkalischen Entwicklungsbedingungen befähigt sind, wobei ein diffundierender Farbstoff in Freiheit gesetzt wird, und bei denen andererseits in oxidierter Form die oben erwähnte Spaltungsreaktion erschwert oder verhindert wird. Derartige Verbindungen sind in Kombination mit herkömmlichen Negativemulsionen zur Herstellung positiver Übertragsfarbbilder geeignet.

Es ist schwierig unter den bisher bekannten farbgebenden Verbindungen geeignete auszuschen, die in jeder Hinsicht zufriedenstellend sind, und zwar sowohl einerseits hinsichtlich ihrer ausreichenden Reaktivität und andererseits hinsichtlich ihrer ausreichenden Stabilität. Sie sollen die diffundierenden Farbstoffe nicht bereits bei der alkalischen Entwicklung in Freiheit setzen, sondern erst, nachdem eine bildmäßige Oxidation durch das bildmäßig entwickelte Silberhalogenid stattgefunden hat. Andererseits muß die Freisetzung der diffundierenden Farbstoffe entweder aus der oxidierten oder aus der nicht oxidierten Form der farbgebenden Verbindungen rasch genug erfolgen und ebenso ist ein schneller Übertrag der diffundierenden Farbstoffe erforderlich.

Sehr wichtig ist, daß die Farbstoffe in der Bildempfangsschicht in ausreichendem Maße festgelegt werden können und daß sie außerdem ausgezeichnete spektrale Eigenschaften und hervorragende Stabilität gegen Licht und Wärme aufweisen.

Es wurde beobachtet, daß die aus den bekannten farbgebenden Verbindungen freigesetzten diffundierenden Farbstoffe nach der Diffusion in die Bildempfangsschicht und Festlegung auf der Beize vielfach nicht zufriedenstellende Lichtechtheiten aufweisen. Außerdem lassen auch in vielen Fällen die

spektralen Eigenschaften, insbesondere die Lage des Absorptionsmaximum und die Halbwertsbreite der Absorptionsbande zu wünschen übrig. Letztere ist ein Maß für die Klarheit der Farbstoffe.

Der Erfindung liegt daher die Aufgabe zugrunde neue farbgebende Verbindungen für das Farbdiffusionsübertragsverfahren anzugeben, bei denen bei der fotografischen Entwicklung diffundierende blaugrüne oder purpurne Farbstoffe in Freiheit gesetzt werden, die eine verbesserte Lichtechtheit und verbesserte spektrale Eigenschaften aufweisen.

Gegenstand der Erfindung ist ein fotografisches Farbdiffusionsübertragungsverfahren zur Herstellung farbiger Bilder, bei dem ein fotografisches Material mit mindestens einer lichtempfindlichen Silberhalogenidemulsionsschicht und einer dieser zugeordneten nichtdiffundierenden farbgebenden Verbindung bildmäßig belichtet und mit einem Silberhalogenidentwicklungsmittel entwickelt wird, wobei unter den Bedingungen der alkalischen Entwicklung bildmäßig ein diffundierender Farbstoff aus der nichtdiffundierenden farbgebenden Verbindung abgespalten und auf eine Bildempfangsschicht übertragen wird. Das Verfahren ist dadurch gekennzeichnet, daß als nichtdiffundierende farbgebende Verbindung eine Verbindung einer der folgenden Formeln I, II und III verwendet wird:

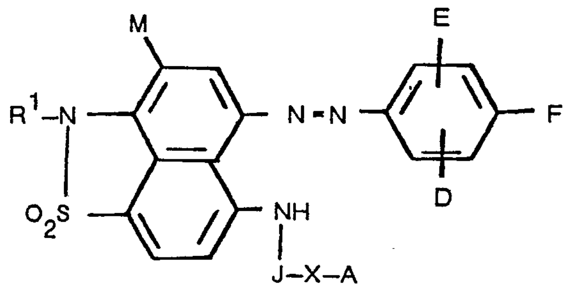

(I)

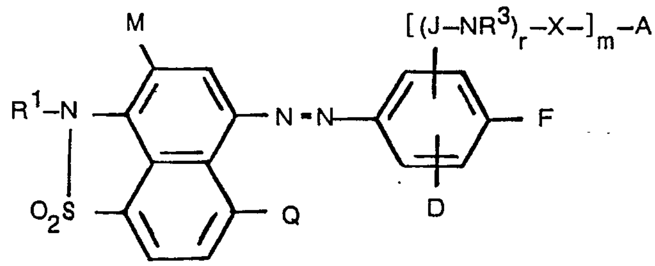

(II)

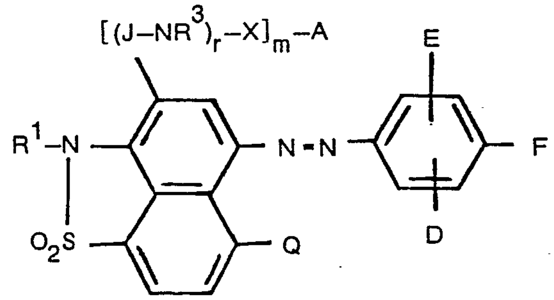

(III)

worin bedeuten:

A einen gegebenenfalls über das Bindeglied X angeknüpften, einen diffusionsfestmachenden Rest enthaltenden oxidierbaren organischen Trägerrest, aus dem unter den alkalischen Bedingungen der fotografischen Entwicklung entweder in oxidierter Form oder in nicht oxidierter Form wenigstens ein Teil zusammen mit dem diffusionsfestmachenden Rest abgespalten wird unter gleichzeitiger bildmäßiger Freisetzung eines diffundierenden Azofarbstoffes;

M Wasserstoff, Halogen, Alkylsulfonyl, Arylsulfonyl oder Sulfamoyl;

Q Acylamino, wobei der Acylrest sich ableitet von aliphatischen oder aromatischen Carbon- oder Sulfonsäuren, einschießlich Kohlensäuremonoestern, Carbaminsäuren und Sulfaminsäuren;

$R^1$ Wasserstoff oder einen hydrolysierbaren Rest einer der Formeln —CO—$R^2$ oder —CO—$OR^2$;

$R^2$ Alkyl mit 1—18 C-Atomen oder Phenyl;

D,E gleich oder verschieden, Wasserstoff, Halogen, Cyan, Nitro, Trifluormethyl, Alkyl, Alkoxy, Sulfamoyl;

F Wasserstoff, Alkyl, Alkoxy, Halogen, Nitro, Sulfamoyl;

J —$SO_2$— oder —CO—;

$R^3$ Wasserstoff oder Alkyl mit 1—6 C-Atomen;

X ein bivalendes Bindeglied der Formel —$R^4$—$(L)_p$—$(R^4)_q$—, worin $R^4$ einen Alkylenrest mit 1—6

C-Atomen oder einen gegebenenfalls substituierten Phenylenrest bedeutet und wobei die beiden Reste $R^4$ die gleiche oder eine verschiedene Bedeutung haben können;

L —O—, —CO—, —CO—$NR^5$—, —$SO_2$—$NR^5$—, —$SO_2$—, —SO—, —S—, ($R^5$=H oder Alkyl);

m, p, q, r jeweils 0 oder 1; q = 1, wenn p = 1.

Wie aus den obigen Formeln I—III ersichtlich, sind Anknüpfungsmöglichkeiten für den nicht-diffundierenden oxidierbaren Trägerrest sowohl über den Phenylring (Formel II) als auch über den Naphthsultamring (Formeln I und III) gegeben. Dieser Trägerrest ist dabei von solcher Art, daß er oder wenigstens ein wesentlicher Teil davon, der den diffusionsfestmachenden Rest trägt, entweder in oxidierter Form oder in nicht-oxidierter Form unter den alkalischen Bedingungen der fotografischen Entwicklung, beispielsweise durch Entwickleralkali oder zufolge einer intramolecularen Umlagerungsreaktion aus der farbgebenden Verbindung abgespalten word, so daß diffundierende Naphthsulfamazofarbstoffe in Freiheit gesetzt werden. Trägerreste A mit derartigen Funktionen sind bekannt. Hier sei beispielsweise auf die in der eingangs erwähnten DE - OS 2 242 762 hingewiesen, die nach der bei der Entwicklung erfolgten Oxidation unter dem Einfluß des Entwickleralkalis unter Freisetzung diffundierender Farbstoffe mit einer freien Sulfamoylgruppe gespalten werden. Weiterhin sei beispielsweise verwiesen auf die in DE - OS 2 505 248 and DE - OS 2 645 656 beschriebenen Verbindungen, z.B. die 3-Sulfonamidoindol-Verbindungen, die in ähnlicher Weise, wenn sie oxidiert sind, einer Spaltung durch das Entwickleralkali unterliegen und hierbei diffundierende Farbstoffe in Freiheit setzen. Auch diese Verbindungen ermöglichen somit einen Farbübertrag an Stellen, in denen eine Entwicklung stattfindet. Weiterhin müssen an dieser Stelle die DE - OS 2 402 900 und die DE - OS 2 543 902 erwähnt werden. In diesen beiden Offenlegungsschriften sind farbgebende Verbindungen beschrieben, die in einer Spaltungsreaktion unter alkalischen Entwicklungsbedingungen aus der nicht-oxidierten Form diffundierende Farbstoffe in Freiheit setzen und bei denen andererseits in oxidierter Form die oben erwähnte Spaltungsreaktion erschwert oder verhindert wird.

Derartige Verbindungen ermöglichen somit einen Farbübertrag im wesentlichen nur an solchen Stellen, in denen nicht eine durch die Entwicklung bedingte Oxidation stattgefunden hat. Sie sind somit zur Herstellung positiver Übertragsbilder geeignet.

Besonders vorteilhafte Verbindungen der Formeln I, II und III sind solche, in denen der Rest A für einen Rest einer der folgenden Formeln steht:

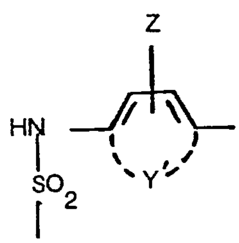
(IV)

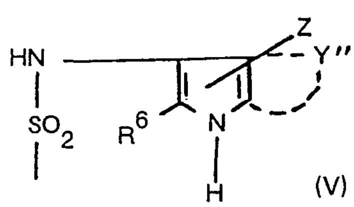
(V)

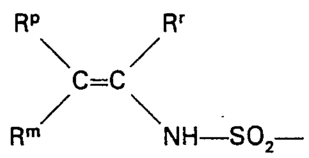
(VI)

in denen

Z für einen diffusionsfestmachenden Rest steht;

Y' für einen zur Vervollständigung eines Benzol- oder Naphthalinringes erforderlichen Rest steht;

Y'' für einen zur Vervollständigung eines ankondensierten, gegebenenfalls substituierten Benzolrestes steht und

$R^6$ Wasserstoff, Alkyl, Aryl, eine heterocyclische Gruppe, Carboxyl, Carbamoyl oder Alkoxycarbonyl bedeutet,

$R^m$ —$OR^n$ oder —$NHR^o$ bedeutet, wobei $R^n$ für Wasserstoff oder einen unter den Bedingungen der fotografischen Entwicklung hydrolysierbaren Rest steht, z.B. für einen Acylrest, der sich ableitet von einer aliphatischen oder aromatischen Carbon- oder Sulfonsäure, einschließlich Kohlensäuremonoester und Carbaminsäure; und $R^o$ für Wasserstoff, Alkyl, z.B. Methyl, n-Butyl oder n-Octadecyl, Aryl, z.B. Phenyl oder Naphthyl, oder Acyl steht, wobei sich der Acylrest ableitet von einer aliphatischen oder aromatischen Carbonsäure oder Sulfonsäure, z.B. Acetyl oder p-Toluolsulfonyl;

$R^p$ Wasserstoff, Alkyl mit bis zu 22 C-Atomen, wie Methyl, n-Butyl, Isopropyl und n-Octadecyl, Aryl wie Phenyl oder o-Carboxyphenyl, oder —$NHR^q$, wobei $R^q$ für einen Alkylrest, z.B. Methyl, einen Arylrest, z.B. Phenyl, oder einen Acylrest, z.B. Benzoyl oder Benzolsulfonyl, steht;

$R^r$ Wasserstoff, Alkyl mit bis zu 22 C-Atomen wie Methyl, Isopropyl, n-Butyl oder n-Octadecyl, Aryl, z.B. Phenyl, Carboxyphenyl oder Phenylaminophenyl, Cyano, —CO—$NHR^s$ oder —CO—$OR^s$, wobei $R^s$ für Alkyl, wie Methyl, oder Aryl, wie Phenyl, steht.

In den Formeln IV, V und VI stellt A zusammen mit der verknüpfenden —NH—$SO_2$-Gruppierung somit einen nichtdiffundierenden, oxidierbaren organischen Trägerrest dar, und zwar einen solchen Trägerrest, der nur in oxidierter Form einer Spaltung durch das Entwickleralkali unterliegt. Eine Farbstoffdiffusion findet daher nur an den Stellen im fotografischen Material statt, in denen eine Silberhalogenidentwicklung erfolgt.

Das in den allgemeinen Formeln I bis III dargestellte bivalente Bindeglied kann beispielsweise ein Rest einer der folgenden Formeln sein:

$-CH_2-CH_2-O-CH_2-CH_2-$ , 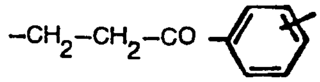 , 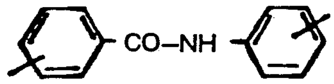 ,

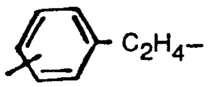 , 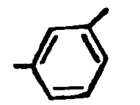 , 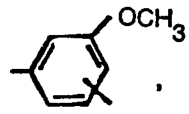 , $-CH_2-CH_2-SO_2-C_6H_{12}-$ ,

und $-C_3H_6-NH-CO-C_2H_4-$.

Es ist darauf hinzuweisen, daß die erfindungsgemäßen farbgebenden Verbindungen als intakte Moleküle in den Schichten des fotografischen Materials nicht diffundieren sollen. Zu diesem Zweck enthalten sie einen diffusionsfest machenden Rest z.B. den Rest Z.

Ausreichende Diffusionsfestigkeit der farbgebenden Verbindungen kann bereits selbst dann gegeben sein, wenn die farbgebenden Verbindungen keine längeren Alkylreste enthalten, da auch dann das Molekül je nach Farbatoffrest eine hinreichende Größe haben kann. Andernfalls besteht die Möglichkeit, die farbgebenden Verbindungen durch Auswahl von Resten geeigneter Größe genügend diffusionsfest zu machen.

Als diffusionsfestmachende Reste sind solche Reste anzusehen, die es ermöglichen, die erfindungsgemäßen Verbindungen in den üblicherweise bei fotografischen Materialien verwendeten hydrophilen Kolloiden diffusionsfest einzulagern. Hierzu sind vorzugsweise organische Reste geeignet, die im allgemeinen gradkettige oder verzweigte aliphatische Gruppen und gegebenenfalls auch isocyclische oder heterocyclische oder aromatische Gruppen mit im allgemeinen 8—20 C-Atomen enthalten. Mit dem übrigen Molekülteil sind diese Reste entweder direkt oder indirekt, z.B. über eine der folgenden Gruppen verbunden: —NHCO—, $-NHSO_2-$, —NR—, wobei R Wasserstoff oder Alkyl bedeutet, —O— oder —S—. Zusätzlich kann der diffusionsfestmachende Rest auch wasserlöslichmachende Gruppen enthalten, wie z.B. Sulfogruppen oder Carboxylgruppen, die auch in anionischer Form vorliegen können. Da die Diffusionseigenschaften von der Molekülgröße der verwendeten Gesamtverbindung abhängen, genügt es in bestimmten Fällen, z.B. wenn das verwendete Gesamtmolekül groß genug ist, als "diffusionsfestmachende Reste" auch kürzerkettige Reste zu verwenden.

Beispiele für geeignete farbgebende Verbindungen gemäß der vorliegenden Erfindung sind die folgenden, in denen als Trägerrest A der folgende Rest verwendet wurde.

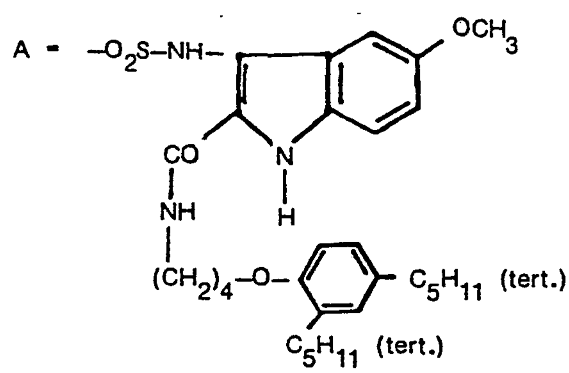

1) 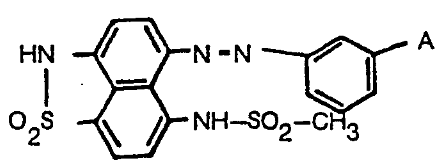 purpur

2) 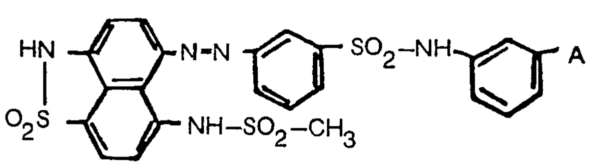 purpur

3) 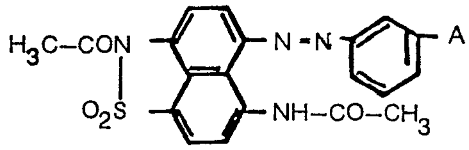 purpur

4) 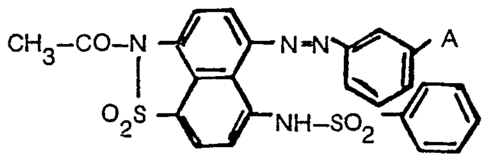 purpur

5) 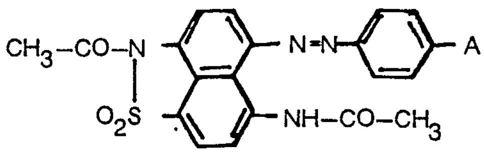 purpur

6) 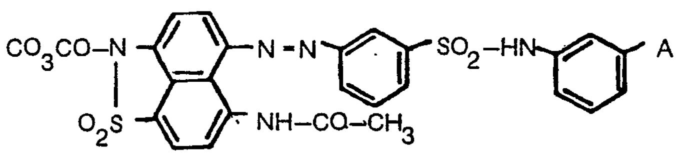 purpur

7) 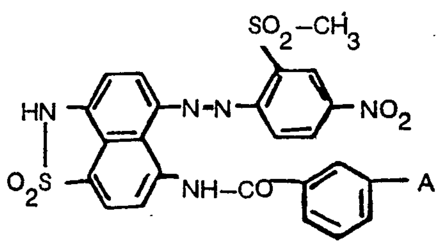 blaugrün

8) 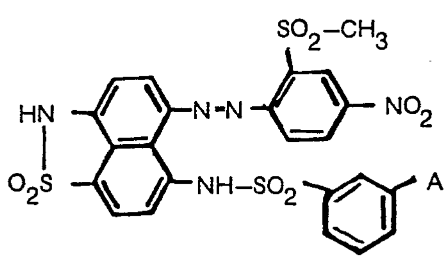 blaugrün

9) 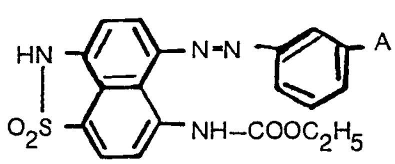 purpur

10) 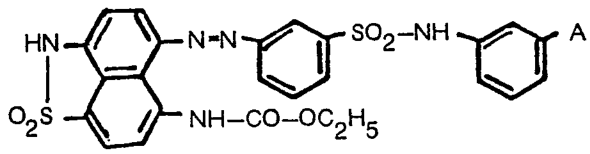 purpur

11) 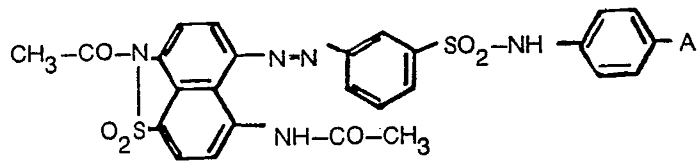 purpur

12) 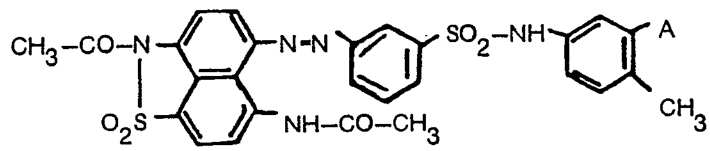 purpur

13) 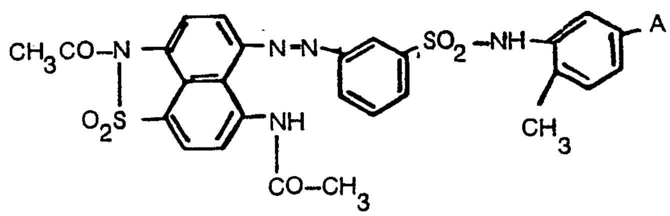 purpur

14) 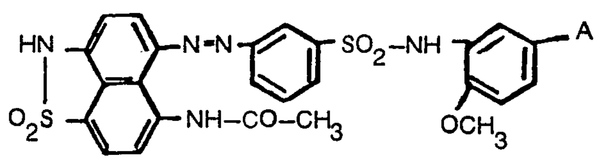 purpur

15) 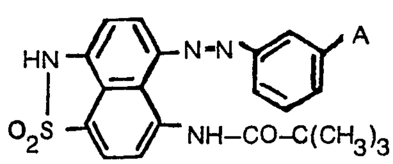 purpur

16) 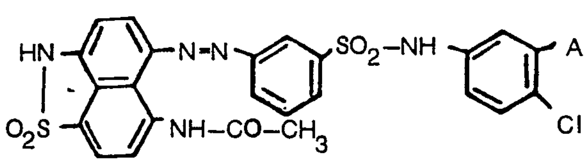 purpur

17) 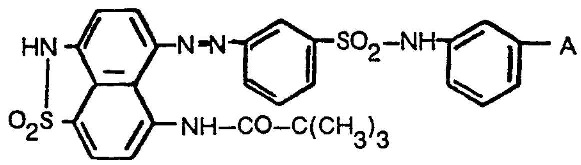 purpur

18) 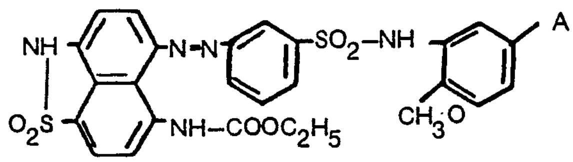 purpur

19) 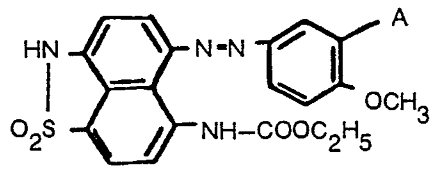 purpur

20) 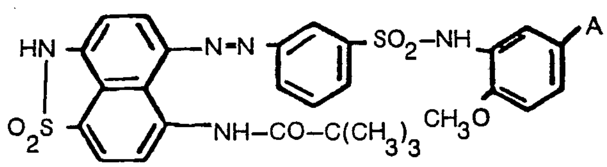 purpur

21) 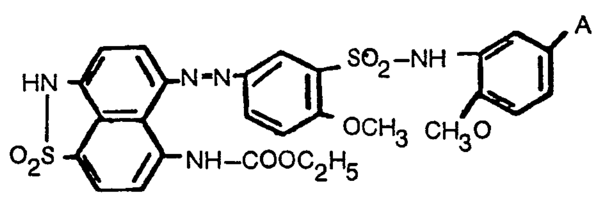 purpur

22) 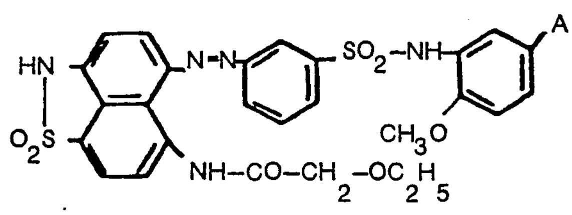 purpur

23) 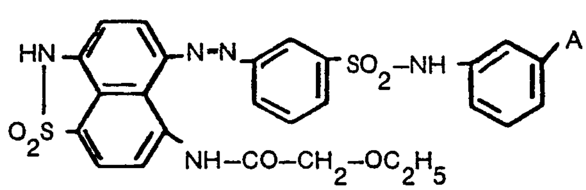 purpur

24) 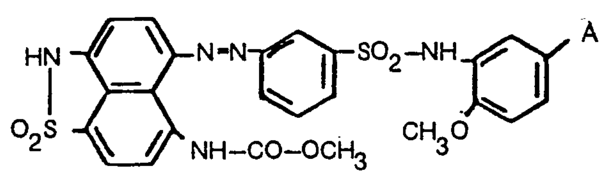 purpur

25) 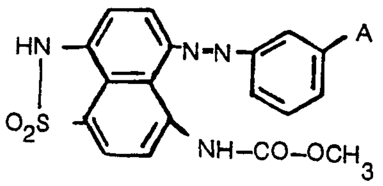 purpur

26) 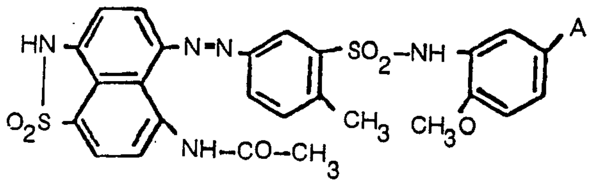 purpur

27) 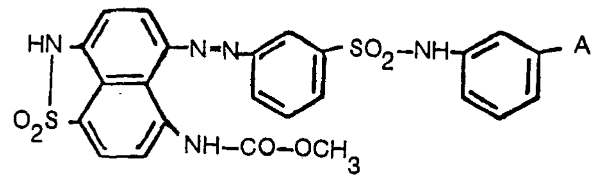 purpur

Zur Herstellung der erfindungsgemäßen farbgebenden Verbindungen wird im allgemeinen ausgegengen von einem geeignet substituierten Anilin, das diazotiert und auf ein geeignet substituiertes Naphthsultamderivat gekuppelt wird. Zweckmäßigerweise enthält bei der Kupplung entweder das eingesetzte Anilinderivat oder das Naphthsultamderivat eine Sulfogruppe. Von dem so erhaltenen Azofarbstoff kann beispielsweise nach bekannten Methoden ein Sulfochloridderivat hergestellt werden, das man anschließend mit der Aminogruppe eines geeigneten oxidierten Trägerrestes reagieren läßt.

Im folgenden sei dei Herstellung der Verbindungen 1 und 7 im Detail beschrieben. In analoger Weise können auch die übrigen farbgebenden Verbindungen der Erfindung hergestellt werden.

Herstellung der farbgebenden Verbindung 1

Herstellung der Verbindung A

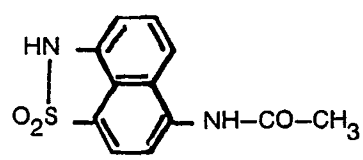

(A)

48 g 4-Acetoamino-8-amino-naphthalin-sulfonsäure-1 werden in 144 ml Phosphoroxychlorid gerührt, 14,4 ml Dimethylformamid zugetropft und die Mischung 1 1/2 Stunden auf 60°C erhitzt. Nach Abkühlen wurde auf 1500 g Eis ausgetragen und 3 Stunden gerührt. Die Fällung wurde abgesaugt, der Rückstand in 100 ml Wasser verrührt, mit konzentrierter Natronlauge auf pH 7 gestellt, abgesaugt, der Rückstand mit Wasser gewaschen und getrocknet. Ausbeute: 26,5 g Verbindung A.

Herstellung der Verbindung C

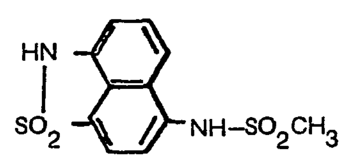

(C)

27,4 g des Napthsultams der Formel B

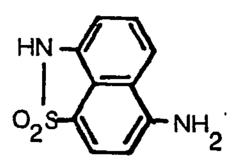

(B)

das durch alkalische Verseifung der Verbindung A erhalten wurde, wurde in 130 ml Pyridin gelöst und

innerhalb 1 Stunde bei 40°C 31,7 ml Methansulfonsäurechlorid zugetropft. Es wurde 1 Stunde nachgerührt, 390 ml Wasser und 40 g Ätznatron zugesetzt und 1 Stunde gerührt. Die Lösung wurde mit Salzsäure auf pH 6 gestellt, die Fällung abgesaugt und mit Wasser gewaschen. Das so erhaltene Produkt wurde in 200 ml Wasser bei pH 10 gelöst, mit Aktivkohle geklärt, auf 70—80°C erhitzt und mit Salzsäure bis zu einem pH-Wert von 2 versetzt. Es wurde abgekühlt, die Fällung abgesaugt, mit Wasser gewaschen und getrocknet. Ausbeute: 20,2 g Verbindung C.

Herstellung des Farbstoffs D

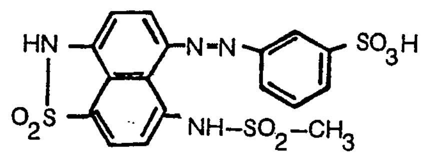

(D)

9,1 g 3-Aminobenzolsulfsäure wurden wie üblich in 145 ml Wasser mit 14,5 ml Salzsäure verrührt und mit 3,6 g Natriumnitrit, in 14,5 ml Wasser gelöst, diazotiert. Die Diazotierung wurde zu einer Lösung von 17,2 g der Verbindung C und 20,5 g natriumcarbonat in 160 ml Wasser schnell zugetropft, 1 Stunde gerührt, 8 g Kochsalz zugegeben, der ausgefallene Farbstoff abgesaugt und mit 5%iger Kochsalzlösung gewaschen. Der Farbstoff wurde in Aceton angeschlämmt, abgesaugt, mit Aceton gewaschen und getrocknet. Ausbeute: 27 g des Farbstoffes D.

Herstellung des Sulfochlorids E

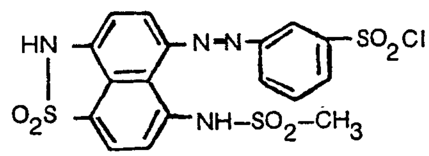

(E)

27 g des Farbstoffes D wurden in 135 ml Thionylchlorid mit 20 ml Dimethylformamid versetzt, die Mischung 30 Minuten gerührt, auf Eis ausgetragen, abgesaugt, der Rückstand mit Wasser neutral gewaschen und an der Luft getrocknet. Ausbeute: 23,8 g Farbstoffsulfochlorid E.

Herstellung der Verbindung 1

. 7.4 g der Aminoindolverbindung F, deren Herstellung nach einer in DE - OS 2 645 656 beschriebenen Methode erfolgt,

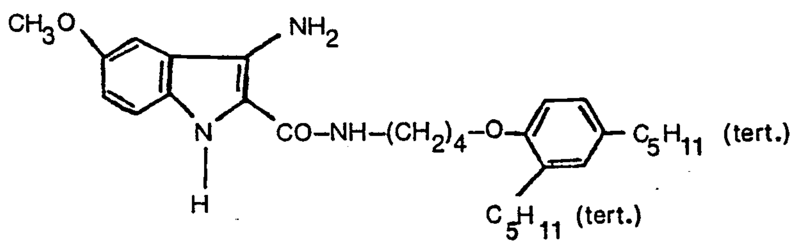

(F)

wurden in 35 ml Chloroform und 7,5 mnl Pyridin gelöst, 7,5 g des Farbstoffsulfochlorids E zugegeben und 2 Stunden bei Raumtemperatur gerührt. Es wurde 15 Minuten am Rückfluß gekocht, 175 ml Methanol zugegeben und die erkaltete Mischung von einem Rückstand filtriert. Das Filtrat wurde zur Trocknung gebracht und der Rückstand in 150 ml Wasser zerkleinert, abgesaugt, mit Wasser gewaschen und getrocknet. Das Produkt wurde in 75 ml Methanol verrührt, über Nacht belassen und das Kristallisat abgesaugt. Es wurde in einer Mischung von 20 ml Chloroform und 40 ml Methanol gelöst, mit Kieselgur geklärt, die Lösung mit weiteren 40 ml Methanol versetzt und über Nacht zur Kristallisation stehen gelassen. Das Produkt wurde abgesaugt, mit Methanol gewaschen und getrocknet. Ausbeute: 3,8 g der Verbindung 1.

Herstellung der farbgebenden Verbindung 7
Herstellung der Verbindung G

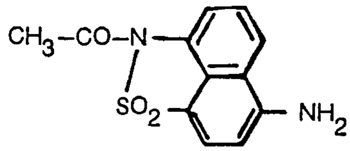

(G)

22 g der Verbindung B wurden in 220 ml Aceton gelöst und nacheinander 28 ml Triäthylamin und 10 ml Acetanhydrid zugesetzt. Nach Rühren über Nacht wurde in 660 ml Wasser gegossen und die Fällung abgesaugt. Der Rückstand wurde in 200 ml Methanol aufgekocht, nach dem Abkühlen abgesaugt und mit einer Mischung von gleichen Teilen Wasser und Methanol gewaschen und getrocknet. Ausbeute: 23,8 g Verbindung G.

Herstellung der Verbindung H

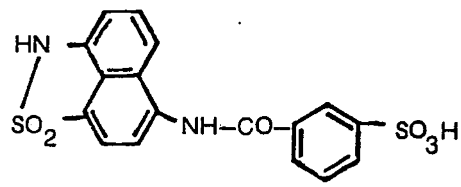

(H)

20,2 g Benzoesäure-3-sulfonsäurechlorid wurden in 150 ml Pyridin 5 Minuten am Rückfluß gekocht, abgekühlt, 16 g der Verbindung G zugegeben und über Nacht gerührt. Es wurden 400 ml gesättigte Kochsalzlösung zugesetzt und unter Kühlung 150 ml konzentrierte Salzsäure zugetropft, 30 Minuten gerührt, die Fällung abgesaugt und mit gesättigter Kochsalzlösung gewaschen. Der Rückstand wurde in 200 ml Wasser aufgekocht und nach dem Abkühlen abgesaugt. Der so erhaltene Rückstand wurde in 20 ml Wasser verrührt und mit 5 n NaOH wurde ein pH-Wert von 12,5 eingestellt und solange gehalten, bis er sich nicht mehr änderte. Die Lösung wurde mit 5 n Salzsäure auf pH 4 gestellt, von einer geringen Fällung abfiltriert und das Filtrat mit 60 g Kochsalz versetzt. Nach Zusatz von 25 ml 20%iger Natriumacetatlösung wurde auf 95°C erhitzt, abkühlen lassen und das Kristallisat abgesaugt. Der Rückstand wurde in 50 ml Aceton 10 Minuten am Rückfluß gekocht, 300 ml Aceton zugegeben, abgekühlt und die Fällung abgesaugt. Ausbeute: 14,2 g Verbindung H.

Herstellung des Farbstoffes I

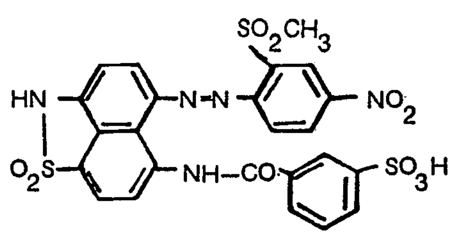

(I)

8,2 g Methyl-(5-nitro-2-aminophenyl)-sulfon wurden in 24 ml Eisessig mit 6 ml Nitrosylschwefelsäure bei 15°C diazotiert. 17,8 g der Verbindung H wurden in 180 ml Methanol verrührt und innerhalb 1 Stunde die Diazotierung bei −5°C zugetropft.

Nach 3-stündigem Rühren wurde die entstandene Fällung abgesaugt, mit Methanol gewaschen und getrocknet. 18 g der so erhaltenen Verbindung wurden in 180 ml Wasser bei pH 12 gelöst, 10 g Kochsalz zugegeben, 30 Minuten gerührt, die Fällung abgesaugt und mit 5%iger Kochsalzlösung gewaschen. Der Rückstand wurde aus 150 ml 5%iger Kochsalzlösung umkristallisiert. Ausbeute: 3,1 g des Farbstoffs I

Herstellung des Sulfochlorids K

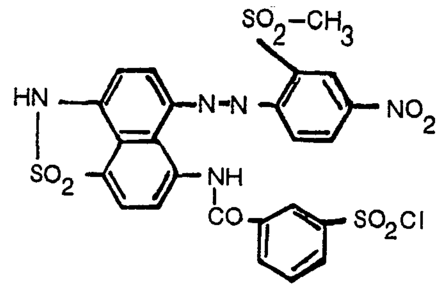

(K)

10 g des Farbstoffs I wurden in 50 ml Phosphoroxychlorid angeschlämmt, 5 ml N-Methylpyrrolidon zugetropft und die Mischung 1 Stunde bei 60°C gerührt. Es wurde abgekühlt, 50 ml Chloroform zugesetzt und der ausgefallene Farbstoff abgesaugt, mit Chloroform gewaschen und getrocknet. Ausbeute: 10,3 Sulfochlorid K

Herstellung der farbgebenden Verbindung 7

7,4 g der Aminoindolverbindung F wurden in 75 ml Chloroform mit 4,5 ml Pyridin gelöst und 9.7 g der Verbindung K wurden zugefügt. Die Mischung wurde 24 Stunden bei Raumtemperatur und anschließend 15 Minuten bei Rückflußtemperatur gerührt, 150 ml Methanol wurden zugesetzt, darauf wurde abgekühlt und die Fällung abgesaugt. Der Rückstand wurde in 200 ml Aceton zum Sieden erhitzt, 400 ml Wasser zugetropft, aufgekocht, abgekühlt, abgesaugt und der Rückstand erst mit Wasser, dann mit Methanol gewaschen und getrocknet. Ausbeute: 9,8 g der farbgebenden Verbindung 7.

In ähnlicher Weise können die übrigen erfindungsgemäßen Verbindungen hergestellt werden.

Die erfindungsgemäßen Verbindungen sind geeignet für das Farbdiffusionsübertragungsverfahren, bei dem sie je nach der vorhandenen Substitution in dem Phenylring der Formeln I, II und III purpurne oder blaugrüne Bildfarbstoffe in Freiheit zu setzen vermögen. Die blaugrünen Farbstoffe weisen im allgemeinen in der p-Stellung des Phenylringes eine Nitrogruppe auf. Die erfindungsgemäßen farbgebenden Verbindungen zeichnen sich durch sehr günstige spektrale Absorptionseigenschaften und außerordentlich hohe Lichtechtheit der abgespaltenen Bildfarbstoffe aus.

Die erfindungsgemäßen farbgebenden Verbindungen werden den Gießlösungen für die Schichten des fotografischen Materials nach einer der üblichen Methoden einverleibt. Die pro Liter Gießlösung verwendete Menge an farbgebender Verbindung variiert in relativ weiten Grenzen, wobei die günstigste Konzentration anhand einfacher Versuche festgestellt wird. Beispielsweise werden pro Liter Geißlösung 5 bis 80 g, vorzugsweise 20 bis 40 g farbgebende Verbindung verwendet.

Die zur Erzielung des gewünschten Effektes erforderliche Zuordnung zwischen diffusionsfester farbgebender Verbindung und Silberhalogenid kann beispielsweise dadurch hergestellt werden, daß die diffusionsfesten Verbindungen unter Ausnutzung vorhandener wasserlöslichmachender Gruppen aus wäßrig-alkalischen Lösungen in die Gießlösungen eingebracht werden. Die nichtdiffundierenden farbgebenden Verbindungen können aber auch in die Schichten nach einem der bekannten Emulgierverfahren eingebracht werden. Solche Verfahren sind beispielsweise in den englischen Patentschriften 791 219 und 1 099 414 bis 1 099 417 beschrieben. Weiterhin ist es möglich, wäßrige Dispersionen der farbgebenden Verbindungen herzustellen und den jeweiligen Gießlösungen zuzusetzen. Hierzu werden wäßrige Aufschlämmungen der farbgebenden Verbindung beispielsweise durch intensives Rühren unter Zusatz von scharfkentigem Sand oder durch Anwendung von Ultraschall fein vermahlen. In einer weiteren Ausführungsform kann es beispielsweise erwünscht sein, die farbgebenden Verbindungen gemeinsam mit Silberhalogenid und gegebenenfalls Entwicklersubstanzen in Form sogenannter Mikrokapseln in die Schicht einzulagern, wobei auch zwei oder mehr verschieden sensibilisierte lichtempfindkapseln in die Schicht einzulagern, wobei auch zwei oder mehr verschieden sensibilisierte lichtempfindliche Silberhalogenid-Emulsionen und die entsprechenden diffusionsfesten Verbindungen in einer einzigen Schicht nach Art der sogenannten Mischkorn-Emulsionen vereinigt werden, wie dies beispielsweise in der amenkanischen Patentschrift 2 698 794 beschrieben ist. Die nicht diffundierenden farbgebenden Verbindungen können in einer lichtempfindlichen Schicht selbst oder in einer Nachbarschicht untergebracht sein. Beispielsweise ist der rotempfindlichen Schicht eine einen blaugrünen Farbstoff abspaltende Verbindung, der grüneempfindlichen Schicht eine einen purpurnen Farbstoff abspaltene Verbindung, und der blauempfindlichen Schicht eine gelben Farbstoff abspaltene Verbindung zugeordnet.

Unter "Zuordnung" und "zugeordnet" wird verstanden, daß die gegenseitige Anordnung von Silberhalogenidemulsion und farbgebender Verbindung von solcher Art ist, daß ein Wechselwirkung zwischen ihnen möglich ist, die eine bildmäßige Übereinstimmung zwischen gebildetem Silberbild und bildmäßiger Verteilung des freigesetzten, diffundierenden Farbstoffes zuläßt. Zweckmäßigerweise wird hierbei die zugeordnete, farbgebende Verbindung in die Silberhalogenidemulsion selbst oder in eine zu

der Silberhalogenidemulsionsschicht benachbarte Schicht eingelagert, wobei diese benachbarte Schicht vorzugsweise (gesehen in Richtung des bei der Belichtung einfallenden Lichtes) hinter der Silberhalogenidemulsionsschicht liegt. Die erfindungsgemäßen farbgebenden Verbindungen werden bei der Entwicklung des Silberbildes von Entwickleroxidationsprodukten bildmäßig oxidiert und unterliegen dann unter dem Einfluß des Entwickler- bzw. Aktivatoralkalis einer Spaltungsreaktion, bei der die Farbstoffreste in diffundierender Form in der Regel als Farbstoffsulfonamide in Freiheit gesetzt werden. Zur Entwicklung sind die üblichen fotografischen Entwicklerverbindungen geeignet, soweit sie in der Lage sind, in oxidierter Form die erfindungsgemäßen farbgebenden Verbindungen zu oxidieren. Beispiele für geeignete Entwickler sind folgende:

Hydrochinon
N-Methylaminophenol
1-Phenyl-3-pyrazolidon
1-Phenyl-4,4-dimethyl-3-pyrazolidon
1-Phenyl-4-methyl-4-hydroxymethyl-3-pyrazolidon

Aminophenole
N,N-D-äthyl-p-phenylendiamin
N-Äthyl-N-hydroxyäthyl-p-phenylendiamin
3-Methyl-N,N-diäthyl-p-phenylendiamin
N,N,N',N'-Tetraalkyl-p-phenylendiamine wie Tetramethyl-p-phenylendiamin und
1,4-Bispyrrolidinobenzol, Reduktone

Es ist besonders darauf hinzuweisen, daß die Auswahl an Entwicklersubstanzen bei dem erfindungsgemäßen Verfahren nicht auf Farbentwickler beschränkt ist, sondern daß auch übliche Schwarzweißentwickler zur Anwendung gelangen können, was wegen der geringeren Verfärbungsneigung der letzteren als Vorteil anzusehen ist. Die Entwickler können bereits in den Schichten des farbfotografischen Materials enthalten sein, wo sie durch die alkalische Aktivatorflüssigkeit aktiviert werden, oder in der alkalischen Verarbeitungsflüssigkeit oder -paste. Da die erfindungsgemäßen farbgebenden Verbindungen selbst Entwicklereigenschaften haben, kann in einzelnen Fällen auf die Verwendung von Hilfsentwicklerverbindungen verzichtet werden. In diesem Fall wird die farbgebende Verbindung unmittelbar durch entwickelbares Silberhalogenid oxidiert.

Wenn die bildmäßige Verteilung des bei der Entwicklung freigesetzten diffundierenden Farbstoffes mit dem entwickelten Silberbild übereinstimmt, wie dies der Fall ist bei den farbgebenden Verbindungen des Typs wie er in den DE - OSen 2 242 762, 2 505 248 und 1 772 929 beschrieben ist, bedarf es zur Erzeugung positiver farbiger Übertragungsbilder der Verwendung von direkt-positiven Silberhalogenidemulsionen oder, falls übliche Negativemulsionen verwendet werden, der Anwendung eines geeigneten Umkehrverfahrens. Im Falle der farbgebenden Verbindungen der zuletzt genannten DE - OS werden die diffundierden Farbstoffe zwar nicht unmittelbar als Folge einer hydrolytischen Spaltung durch Alkali, sondern eher als Folge einer intramolekularen Verdrängungsreaktion unter Ringschluß in Freiheit gesetzt. Auch weisen die freigesetzten Farbstoffe nicht eine freie Sulfonamidgruppe auf wie die aus den erfindungsgemäß bevorzugt verwendeten farbgebenden Verbindungen abgespaltenen Farbstoffe, sondern eine Sulfinsäuregruppe, jedoch ist die Erfindung keineswegs beschränkt auf solche farbgebende Verbindungen, bei denen die Spaltung durch Alkali erfolgt.

Ein solches Umkehrverfahren steht in dem Silbersalzdiffusionsverfahren zur Verfügung. Die fotografische Umkehrung mit Hilfe des Silbersalzdiffusionsverfahrens zur Erzeugung von positiven farbigen Bildern unter Verwendung konventioneller Farbkuppler ist beispielsweise in der US - PS 2 763 800 beschrieben. Durch Austausch der Farbkuppler gegen die erwähnten farbgebenden Verbindungen, kommt man zu einem lichtempfindlichen Element, das für das Farbstoffdiffusionsübertragungsverfahren geeignet ist. Ein solches lichtempfindliches Element weist beispielsweise mindestens eine Kombination auf aus einer lichtempfindlichen Silberhalogenidemulsionsschicht und einer dieser zugeordneten Bindemittelschicht, die Entwicklungskeime für die physikalische Entwicklung und eine farbgebende Verbindung enthält.

Bei der Entwicklung wird in der lichtempfindlichen Silberhalogenidemulsionsschicht der belichtete Anteil des Silberhalogenids chemisch entwickelt; der nicht belichtete Anteil wird vermittels eines Silberhalogenidlösungsmittels in die zugeordnete Entwicklungskeime enthaltende Bindemittelschicht übertragen und dort physikalisch entwickelt. Wenn für die physikalische Entwicklung ein Entwickler verwendet wird, der in oxidierter Form als Folge einer Reaktion mit der in dieser Schicht vorhandenen farbgebenden Verbindung einen diffundierenden Farbstoff in Freiheit zu setzen vermag, dann kommt es zur Bildung einer bildmäßigen Verteilung diffundierender Farbstoffe, die auf eine Bildempfangsschicht übertragen werden können und dort ein positives farbiges Bild bilden.

Bei der Umkehrung untrer Verwendung von bildmäßig Entwicklungsinhibitoren abspaltenden Verbindungen besteht das lichtempfindliche Element aus mindestens einer Schichtkombination einer lichtempfindlichen Silberhalogenidemulsionsschicht und einer zweiten unbelichtet entwickelberen Emulsionsschicht, die die farbgebende Verbindung enthält. Die lichtempfindliche Silberhalogenidemulsionsschicht wird mit beispielsweise Farbentwicklern in Gegenwart von bestimmten Verbindungen entwickelt, die bei der Reaktion mit oxidiertem Farbentwickler entwicklungshemmende Substanzen abspalten. Die in der lichtempfindlichen Schicht bildmäßig in Freiheit gesetzten entwicklungshemmenden Substanzen diffundieren in die benachbarte unbelichtet entwickelbare Emulsionsschicht und hemmen dort bildmäßig die Entwicklung. Dabei werden die ungehemmten (positiven) Anteile der unbelichtet entwickelbaren Emulsionsschicht durch den restlichen Entwickler entwickelt, dessen Oxidationsprodukte dann mit den nichtdiffundierenden farbgebenden Verbindungen gemäß der Erfindung unter Freisetzung diffundierender Farbstoffe reagieren, die bildmäßig auf das Bildempfangselement übertragen werden. Geeignete Verbindungen, die bei Reaktion mit Farbentwickleroxidationsprodukten entwicklungshemmende Substanzen abspalten, sind beispielsweise die bekannten DIR-Kuppler (DIR = development inhibitor releasing), bei denen es sich um Farbkuppler handelt, die in der Kupplungsteile einen abspaltbaren Inhibitorrest enthalten. Derartige DIR-Kuppler sind beispielsweise in der US - PS 3 227 554 beschrieben.

Eine weitere Gruppe von Verbindungen, die bei Reaktion mit Farbentwickleroxidationsprodukten entwicklungshemmende Substanzen abspalten; ist in der US - PS 3 632 345 beschrieben. Hierbei handelt es sich nicht um Farbkuppler. Entsprechend entstehen bei der Freisetzung der entwicklungshemmenden Substanzen auch keine Farbstoffe. Gemäß der DT - PS 1 229 389 können bei einem solchen Verfahren schließlich auch geeignete substituierte, nichtdiffundierende Hydrochinon-Verbindungen verwendet werden, die bei der Reaktion mit Entwickleroxidationsprodukten zu den entsprechenden Chinonen oxidiert werden und dabei entwicklungshemmende Mercaptane abspalten.

Als direkt positive Silberhalogenidemulsionen sind prinzipiell alle direkt positiven Silberhalogenidemulsionen geeignet, die bei einer einfachen Entwicklung ein positives Silberbild und eine diesem entsprechende bildmäßige Verteilune von Entwickleroxidationsprodukten erzeugen. In Frage kommen beispielsweise solche Silberhalogenidemulsionen, in denen durch Belichten oder durch chemische Behandlung ein entwickelbarer Schleier erzeugt worden ist, der unter Einhaltung bestimmter Bedingungen bei der bildmäßigen Belichtung bildmäßig zerstört wird. An den unbelichteten Stellen bleibt der Schleier erhalten, so daß bei der anschließenden Entwicklung ein direkt positives Silberbild erhalten wird, und in Übereinstimmung damit eine bildmäßige Verteilung an diffundierendem Farbstoff, wenn der direkt positiven Silberhalogenidemulsion eine farbgebende Verbindung des Typs wie beispielsweise in den DE-OSen 2 242 762, 2 505 248 oder 2 645 656 beschrieben ist, zugeordnet ist.

Eine weitere Gruppe von direkt positiven Silberhalogenidemulsionen, die gemäß der Erfindung bevorzugt verwendet werden, umfaßt die sogenannten unverschleierten direkt positiven Silberhalogenidemulsionen, die eine Lichtempfindlichkeit überwiegend im Innern der Silberhalogenidkörner aufweisen. Bei der bildmäßigen Belichtung dieser Emulsionen bildet sich ein latentes Bild überwiegend im Innern der Silberhalogenidkörner. Die Entwicklung derartiger unverschleierter direkt positive Silberhalogenidemulsionen wird allerdings unter schleiernden Bedingungen vorgenommen, wobei vorwiegend an den unbelichteten Stellen ein Schleier erzeugt und bei der Entwicklung ein positives Silberbild entwickelt wird. Die unverschleierten direkt positiven Silberhalogenidemulsionen sind dadurch charakterisiert, daß belichtete Proben bei der Entwicklung unter Verwendung eines typischen Oberflächenentwicklers der folgenden Zusammensetzung:

| | |
|---|---|
| p-Hydroxyphenylglycin | 10 g |
| Natriumcarbonat (kristallisiert) | 100 g |
| auffüllen mit Wasser auf | 1000 ml |

vorzugsweise kein Silberbild, oder nur eines mit sehr geringer Dichte ergeben, während bei Verwendung eines Innenkeimentwicklers der folgenden Zusammensetzung:

| | |
|---|---|
| Hydrochinon | 15 g |
| Monomethyl-p-aminophenolsulfat | 15 g |
| Natriumsulfit (wasserfrei) | 50 g |
| Kaliumbromid | 10 g |
| Natriumhydroxid | 25 g |
| Natriumthiosulfat (kristallisiert) | 20 g |
| suffüllen mit Wasser auf | 1000 ml |

ein Silberbild mit ausreichender Dichte entsteht.

Die selektive Verschleierung der bildmäßig belichteten unverschleierten Direktpositiv-Emulsionen kann vor oder während der Entwicklung durch Behandlung mit einem Verschleierungsmittel vorgenommen werden. Geeignete Verschleierungsmittel sind Reduktionsmittel wie Hydrazin oder substituierte Hydrazine. Verwiesen sei beispielsweise auf US - PS 3 227 552, wobei das Verschleierungsmittel auch diffusionsfest eingelagert sein kenn.

Unverschleierte direktpositive Emulsionen sind beispielsweise solche, die im Innern der Silberhalogenidkörner Fehlstellen aufweisen (US - PS 2 595 250) oder Silberhalogenidemulsionen mit geschichtetem Kornaufbau (DT - OS 2 308 239).

Wenn erfindungsgemäße farbgebende Verbindungen mit einem nichtdiffundierenden oxidierbaren Trägerrest eines solchen Typs verwendet werden, wie er in den DT - OSen 2 402 900 und 2 543 902 beschrieben ist, d.h. einem Trägerrest, der nur in nicht oxidierter Form durch Alkali abgespalten wird, während in oxidierter Form die Abspaltung erschwert oder verhindert ist, bedarf es selbstverständlich zur Herstellung positiver Übertragsbilder keiner direktpositiver Emulsionen und keiner Umkehrverfahren, sondern es genügen übliche Negativemulsionen.

Zur Durchführung des Farbstoffdiffusionsübertragungsverfahrens, gemäß der Erfindung, wird ein lichtempfindliches Element verwendet, das eine oder mehrere Silberhalogenidemulsionen, sowie die diesen zugeordneten nichtdiffundierenden, farbgebenden Verbindungen enthält, und ein Bildempfangselement, in dem durch die bildmäßig, übertragenen, diffundierenden Farbstoffe das gewünschte Farbbild erzeugt wird. Hierzu ist es erforderlich, daß zwischen dem lichtempfindlichen Element und dem Bildempfangselement mindestens während eines endlichen Zeitraumes innerhalb der Entwicklungszeit ein fester Kontakt besteht, so daß die, in dem lichtempfindlichen Element als Folge der Entwicklung erzeugte Bildmäßige Verteilung an diffundierenden Farbstoffen auf das Bildempfangselement übertragen werden kann. Der Kontakt kann hergestellt werden, nachdem die Entwicklung in Gang gesetzt worden ist, oder er kann bereits hergestellt worden sein, bevor die Entwicklung beginnt. Letzteres ist beispielsweise der Fall, falls zur Durchführung des Farbstoffdiffusionsübertragungsverfarhens ein Material verwendet wird, in dem das lichtempfindliche Element und das Bildempfangselement eine intergrale Einheit bilden, im folgenden auch als Monoblattmaterial bezeichnet, die auch nach Beenidung des Entwicklungsvorganges weiter bestehen bleibt; d.h., eine Abtrennung des lichtempfindlichen Elementes vom Bildempfangselement ist auch nach erfolgtem Farbübertrag nicht vorgesehen. Eine solche Ausfürungsform ist beispielsweise bescrieben in der DE - OS 2 019 430.

Ein für die Durchführung des Farbstoffdiffusionsübertragungsverfahrens gemäß der Erfindung geeignetes Monoblattmaterial weist beispielsweise folgende Schichtelemente auf:

1) einene transparenten Schichtträger
2) eine Bildempfangsschicht
3) eine lichtundurchlässige Schicht
4) ein lichtempfindliches Element mit mindestens einer lichtempfindlichen Silberhalogenidemulsionsschicht und mindestens einer dieser zugeordneten nichtdiffundierenden, farbgebenden Verbindung
5) eine Verzögerungsschicht
6) eine saure Polymerschicht
7) einen transparenten Schichtträger

Das Monoblattmaterial kann dabei in der Weise zusammengesetzt werden, daß getrennt voneinander zwei verschiedene Teile hergestellt werden, nämlich der lichtempfindliche Teile (Schichtelemente 1—4) und das Abdeckblatt (Schichtelemente 5—7), die dann schichteseitig aufeinander gelegt und miteinander verbunden werden, gegebenenfalls unter Verwendung von Abstandsstreifen, so daß zwischen den beiden Teilen ein Raum für die Aufnahme einer genau bemessenen Menge einer Arbeitsflüssigkeit gebildet wird. Die Schichtelemente 5 und 6, die zusammen das Neutralisationssystem bilden, können auch, allerdings in vertauschter Reihenfolge, zwischen dem Schichtträger und der Bildempfangsschicht des lichtempfindlichen Teiles angeordnet sein.

Es können Mittel vorgesehen sein, um eine Arbeitsflüssigkeit zwischen den lichtempfindlichen Teil und das Abdeckblatt einzuführen, z.B. in Form eines seitlich angeordneten, aufspaltbaren Behälters, der bei Einwirkung mechanischer Kräfte seinen Inhalt zwischen zwei benachbarte Schichten des Monoblattmaterials ergießt.

Ein wesentlicher Teil des fotografischen Materials gemäß der Erfindung ist das lichtempfindliche Element, das im Falle eines Einfarbstoffübertrasverfahrens eine lichtempfindliche Silberhalogenidemulsionsschicht und dieser zugeordnet, eine nichtdiffundierende farbgebende Verbindung enthält. Dabei kann sich die nichtdiffundierende Verbindung in einer zu der Silberhalogenidemulsionsschicht benachbarten Schicht, oder in der Silberhalogenidemulsionsschicht selbst befinden, wobei im letzteren Fall die Farbe des Bildfarbstoffes bevorzugt so ausgewählt wird, daß der überwiegende Absorptionsbereich der farbgebenden Verbindung nicht übereinstimmt mit dem überwiegenden Empfindlichkeitsbereich der Silberhalogenidemulsionsschicht. Zur Herstellung mehrfarbiger Übertragsbilder in naturgetreuen Farben enthält das lichtempfindliche Element jedoch drei derartige Zuordnungen von farbgebender Verbindung und lichtempfindlicher Silberhalogenidemulsionsschicht, wobei in der Regel

der Absorptionsbereich der farbgebenden Verbindung mit dem Bereich der spektralen Empfindlichkeit der zugeordneten Silberhalogenidemulsionsschicht im wesentlichen übereinstimmen wird. Voraussetzung für eine möglichst hohe Empfindlichkeit ist dann jedoch, daß jeweils die farbgebende Kombination in einer separaten Bindemittelschicht (gesehen in Richtung des bei der Belichtung einfallenden Lichtes) hinter der Silberhalogenidemulsionsschicht angeordnet ist.

Die bei der Entwicklung einer Silberhalogenidemulsion entstehenden Entwickleroxidationsprodukte dürfen sich selbstverständlich nur auf die zugeordnete farbgebende Verbindung auswirken. Es sind deshalb im allgemeinen in dem lichtempfindlichen Element Trennschichten vorhanden, die die Diffusion der Entwickleroxidationsprodukte in andere nicht zugeordnete Schichten wirksam unterbinden. Diese Trennschichten können z.B. geeignete Substanzen enthalten, die mit den Entwickleroxydationsprodukten reagieren, beispielsweise nichtdiffundierende Hydrochinonderivate, oder falls es sich bei dem Entwickler um eine farbentwicklersubstanz handelt, nichtdiffundierende Farbkuppler. In einer bevorzugten Ausführungsform hat deshalb das lichtempfindliche Element folgenden Aufbau (von oben nach unten):

Blauempfindliche Silberhalogenideemulsionsschicht,
Schicht mit nichtdiffundierender, einen diffundierenden Gelbfarbstoff freisetzender Verbindung.
Trennschicht,
Grünsensibilisierte Silberhalogenidemulsionsschicht,
Schicht mit nichtdiffundierender, einen diffundierenden Purpurfarbstoff freisetzender Verbindung
Trennschicht
Rotsensibilisierte Silberhalogenidemulsionsschicht,
Schicht mit nichdiffundierender, einen diffundierenden Blaugrünfarbstoff freisetzender Verbindung.

Selbstverständlich können die Silberhalogenidemulsionsschichten auch in anderer Reihenfolge angeordnet sein, wo bei jedoch die zugeordneten Schichten mit den farbgebenden Systemen ebenfalls vertauscht werden müssen, so daß die Zuordnung erhalten bleibt.

Die unter dem lichtempfindlichen Element angeordnete lichtundurchlässige Schicht ist durchlässig für wässerige alkalische Behandlungslösungen und damit für die diffundierenden Farbstoffe. Sie hat im wesentlichen zwei Funktionen. Erstens dient sie dazu, das nach der Entwicklung in dem ursprünglich lichtempfindlichen Element verbleibende Bildsilber, sowie die als Farbnegativ zurückbleibenden farbgebenden Verbindungen abzudecken, so daß bei der Betrachtung durch den transparenten Schichtträger des lichtempfindlichen Teils nur das positive Farbüertragsbild sichtbar ist. Zweitens schließt sie das lichtempfindliche Element nach der Seite der Bildempfangsschicht (nach unten) lichdicht ab. Letzteres ist besonders dann von Bedeutung, wenn das Monoblattmaterial nach der Belichtung noch in der Kamera mit der alkalischen Verarbeitungsmasse in Berührung gebracht, dann aus der Kamera herausgezogen und außerhalb der Kamera entwickelt werden soll.

Schichten mit genügender Lichtundurchlässigkeit, aber genügender Durchlässigkeit für diffundierende Farbstoffe können beispielsweise mit Suspensionen anorganischer oder organischer dunkler, vorzugsweise schwarzer Pigmente, beispielsweise mit Suspensionen von Ruß in geeigneten Bindemitteln z.B. in Gelatinelösungen hergestellt werden. Im allgemeinen genügen 0,5 bis 5 $\mu$ starke Schichten, die in Gelatine 10 bis 90 Gew.-% (bezogen auf das gesamte Trockengewicht) an Ruß enthalten, um in genügendem Maße während der Entwicklung einen Ausschluß des Lichtes zu gewährleisten.

Die lichtundurchlässige Schicht umfaßt vorzugsweise außer der schwarzen Pigmentschicht noch eine darunter angeordnete weiße Pigmentschicht. Diese hat die Aufgabe, die schwarze Schicht zu verdecken und für das Bild einen weißen Untergrund zu schaffen. Geeignet hierfür sind alle weißen Pigmente, sofern ihre Deckkraft bei nicht allzu großen Schichtdicken genügend hoch ist. Erwähnt seien beispielsweise Bariumsulfat, Oxide von Zink, Titan, Silizium, Aluminium und Zirkon, ferner Bariumstearat oder Kaolin. Titandioxyd wird als weißes Pigment bevorzugt. Die Dicke der weißen Pigmentschicht kann je nach der gewünschten Weiße des untergrundes variiert werden. Bevorzugt werden Dicken zwischen 5—20 $\mu$ eingesetzt.

Anstelle der lichtundurchlässigen Schicht können in dem Monoblattmaterial, gemäß der Erfindung, auch Mittel zur Erzeugung einer solchen lichtundurchlässigen Schicht zwischen dem lichtempfindlichen Element und der Bildempfangsschicht angeordnet sein, z.B. in Form eines seitlich angeordneten Behälters mit einer ein Trübungsmittel (Pigment) enthaltenden Verarbeitungsflüssigkeit, der bei Einwirkung mechanischer Kräfte seinen Inhalt zwischen die genannten Schichten ergießt, so daß sich dort eine derartige Pigmentschicht bildet.

Die Bildempfangsschicht besteht im wesentlichen aus einem Bindemittel, das Farbstoffbeizmittel für die Festlegung der diffundierenden Farbstoffe enthält.

Als Beizmittel für saure Farbstoffe dienen vorzugsweise langkettige quaternäre Ammonium- oder Phosphoiniumverbindungen oder ternäre Sulfonumverbindungen, z.B. solche wie sie beschrieben sind in den US-PSen 3 271 147 und 3 271 148. Ferner können auch bestimmte Metallsalze und ederen Hydroxide, die mit den sauren farbstoffen schwerlösliche Verbindungen bilden, verwandt werden. Die

Farbstoffbeizmittel sind in der Empfangsschicht in einem der üblichen hydrophilen Bindemittel dispergiert, z.B. in Gelatine, Polyvinylpyrrolidon, ganz oder partiell hydrolysierten Celluloeestern und dergleichen. Selbsverständlich können auch manche Bindemittel als Beizmittel fungieren, z.B. Mischpolymerisate oder Polymerisatgemische von Vinylalkohol und N-Vinylpyrrolidon wie beispielsweise beschreiben in der DE-AS 1 130 284, ferner solche, die Polymerisate von stickstoffhaltigen quaternären Basen darstellen, z.B. Polymerisate von N-Methyl-2-vinylpyridin, wie beispielsweise beschrieben in der US-PS 2 484 430. Ein sehr bevorzugtes Beizmittel ist beispielsweise ein Vernetzungsprodukt einer Mischung aus Gelatine und einem Glycidylgruppen enthaltenden kationischen Polyurethan wie beschrieben in DE-OS 2 631 521. Weitere brauchbare beizende Bindemittel sind beispielsweise Guanylhydrazonderivate von Acylstyrol-polymerisaten wie beispielsweise beschrieben in der DE-OS 2 009 498. Im allgemeinen wird man jedoch den zuletzt genannten beizenden Bindemitteln andere Bindemittel, z.B. Gelatine zusetzen.

Als transparente Schichtträger für das erfindungsgemäße Monoblattmaterial können die üblichen in der photographischen Praxis verwendeten transparenten Trägermaterialien, z.B. Filme aus Celluloseestern, Polyäthylenterephthalat, Polycarbonat oder anderen filmbildenden Polymeren, Verwendung finden.

Durch die alkalische Verarbeitungsmasse wird in dem lichtempfindlichen Material ein relativ hoher pH-Wert eingestellt (etwa 11 bis 14), wodurch die Entwicklung und die bildmäßige Farbstoffdiffusion ausgelöst wird. Um nach einer bestimmten Entwicklungszeit den pH-Wert abzusenken und hierdurch die Entwicklung und die Nachdiffusion zu unterbrechen, kann in bekannter Weise ein Neutralisationssystem vorgesehen sein.

Neutralisationssysteme, worunter Kombination aus einer sauren Polymerischicht und einer Verzögerungsschicht verstanden werden, sind beispielsweise beschrieben in der DE-PS 1 285 310. Derartige Schichtkombinationen können in dem erfindungsgemäßen Material vorhanden sein, beispielsweise in dem lichtempfindlichen Teil zwischen dem transparenten Schichtträger und der Bildempfangsschicht. Eine weitere Möglichkeit besteht darin, das Neutralisationssystem aus einer sauren Polymerschicht und einer Verzögerungsschicht auf dem Deckblatt anzuordnen. Selbstverständlich müssen diese beiden Schichten in einer derartigen Reihenfolge angeordnet sein, daß das Alkali der Verarbeitungsmasse zunächst die Verzögerungsschicht durchdringen muß, um in die saure Polymerschicht zu gelangen.

Das erfindungsgemäße Farbstoffdiffusionsübertragungsverfahren läßt sich vorteilhaft in bzw. mittels einer geeigneten Selbstentwicklerkamera durchführen. Diese kann z.B. mit Vorrichtungen versehen sein, die es ermöglichen, nach der Belichtung des lichtempfindlichen Elementes zwischen diesem und dem Deckblatt eine Arbeitslösung zu verteilen und das lichtempfindliche Material nach oben lichtundurchlässig abzudecken. Vorzugsweise ist eine solche Kamera mit zwei gegeneinander gelagerten Quetschwalzen versehen, zwischen denen das Monoblattmaterial herausgezogen wird, wobei die seitlich angeordneten Behälter aufgespalten werden und ihren Inhalt zwischen die Schichten des Monoblattmaterials entlassen.

Da das lichtempfindliche Element nach dem Passieren der Quetschwalzen beiderseits durch lichtundurchlässige Schichten gegen unerwünschte Belichtung geschützt ist, kann das belichtete Material unmittelbar nach Ingangsetzung der Entwicklung aus der Kamera herausgezogen werden.

Zur Verarbeitung des bildmäßig belichteten Monoblattmaterials wird das lichtempfindliche Element in Kontakt gebracht mit der wäßrig alkalischen Arbeitslösung. Hierbei werden in Gegenwart der Entwicklerverbindung die bildmäßig belichteten Silberhalogenidemulsionsschichten entwickelt, wobei in Übereinstimmung mit dem dabei gebildeten Silberbild eine bildmäßige Verteilung von Oxidationsprodukten der Entwicklerverbindung erzeugt wird, die die zugeordnete farbgebende Verbindung oxidiert, worauf diese unter Reaktion mit dem Alkali des Aktivators den diffundierenden Farbstoff abspaltet. Die wäßrig alkalische Arbeitslösung kann viskositätserhöhende Zusätze enthalten, z.B. Hydroxyäthylcellulose. Weiterhin können in der Arbeitslösung in bekannter Weise Entwicklungsbeschleuniger, Stabilisatoren, Silbersalzlösungsmittel, Schleiermittel, Antioxydantien und weitere Zusätze enthalten sein.

Bezüglich weitere Einzelheiten von für das erfindungsgemäße Verfahren geeigneten fotografischen Aufzeichnungsmaterialien sei beispielsweise verwiesen auf die Research Disclosure Publikation Nr. 15162, November 1976.

Anwendungsbeispiele

Beispiel 1

Ein lichtempfindliches Element eines fotografischen Materials gemäß der Erfindung wurde dadurch hergestellt, daß auf einem transparenten Träger aus Polyesterfolie folgende Schichten nacheinander aufgetragen wurden. Die Mengenangaben beziehen sich dabei jeweils auf 1 $m^2$.

1) Eine Beizschicht aus 6 g eines Polyurethans aus 4,4-Diphenyhlmethandiisocyanat, N-Äthyldiäthanolamin und Epichlorhydrin gemäß Beispiele 1 der DE-OS 2 631 521 und 6,0 g Gelatine.

2) Eine Reflektionsschicht aus 24 g $TiO_2$ und 2,4 g Gelatine.

3) Eine Rußschicht aus 1,9 g Ruß und 2 g Gelatine.

4. Eine Farbstoffschicht aus 0,5 g der Verbindung 7 (blaugrün) und 0,9 g Gelatine.

5) Eine rot sensibilisierte Emulsionsschicht mit einer unverschleierten direkt-positiv arbeitenden Silberchloridbromemulsion mit 1,3 g Gelatine und 40 mg Verbindung L (Schleiermittel), Silberauftrag 2,6 g.

6) Eine Sperrschicht aus 0,5 g Octadecylhydrochinonsulfosäure und 1,3 g Gelatine.

7) Eine Farbstoffschicht aus 1 g der Verbindung 1 (purpur) und 1 g Gelatine.

8) Eine grün sensibilisierte Emulsionsschichte mit einer unverschleierten direkt positiv arbeitenden Silberchloridbromidemulsion mit 1,28 g Gelatine und 40 mg Verbindung L, Silberauftrag 2,5 g.

9) Eine Sperrschicht identisch mit Schicht 6).

10) Eine Farbstoffschicht aus 1,0 g der Verbindung M (gelb) und 1,0 g Gelatine.

11) Eine blau sensibilisierte Emulsionsschicht mit einer unverschleierten direkt-positiv arbeitenden Silberchloridbromidemulsion mit 1,4 g Gelatine und 40 mg Verbindung L, Silberauftrag 2,7 g.

12) Eine Schutzschicht aus 0,8 g Gelatine und 0,8 g einer Verbindung der folgenden Formel (Härtungsmittel):

$$\left\{ C_2H_5-N=C=N-CH_2-CH_2-CH_2-\overset{\oplus}{N}\equiv(C_2H_5)_3 \right\} Cl^{\ominus}$$

13) Ein transparentes Deckblatt aus Polyäthylenterephthalat mit einer Neutralisationsschicht und einer Verzögerungsschicht.

Nach Belichtung durch einen Stufenkeil wurde das lichtempfindliche Element mit dem transparenten Deckblatt auf der Schichtseite abgedeckt. Zur Entwicklung des bildmäßig belichteten lichtempfindlichen Elements wurde ein aufspaltbarer Behälter mit einer alkalischen Arbeitsflüssigkeit folgender Zusammensetzung verwendet:

70 g KOH
10 ml Benzylalkokol
3 g Benzotriazol
1 g Natriumsulfit
6,0 g 1-Phenyl-4-methyl-4-hydroxymethyl-3-pyrazolidon
0,1 g Hydrochinon
40,0 g Natrosol HHR 250 (Hydroxyäthylcellulose) aufgefüllt mit Wasser auf 1000 ml.

Der Bildset wurde durch ein Quetschwalzenpaar geführt, wobei sich die Entwicklerpaste zwischen lichtempfindlichem Element und Abdeckblatt verteilte. Die Pastenstärke betrug 110 $\mu$. Um diese einzustellen, wurden seitlich entlang dem Bildrand zwischen lichtempfindlichem Element und Abdeckblatt Abstandsstreifen entsprechender Dicke angebracht.

Nach einer Entwicklungszeit von 10 Minuten wurde eine direkt-positive mehrfarbige Abbildung der Vorlage mit ausgezeichneter Farbbrillanz und Lichtechtheit erhalten.

Ähnliche Ergebnisse werden erhalten, wenn man die Verbindung 7 in Schicht 4 durch die Verbindung 8 ersetzt oder/und die Verbindung 1 in Schicht 7 durch die Verbindungen 11, 13, 15 oder 18 ersetzt.

Formelanhang zu Beispiel 1

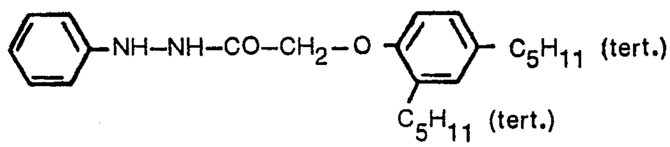

(L)

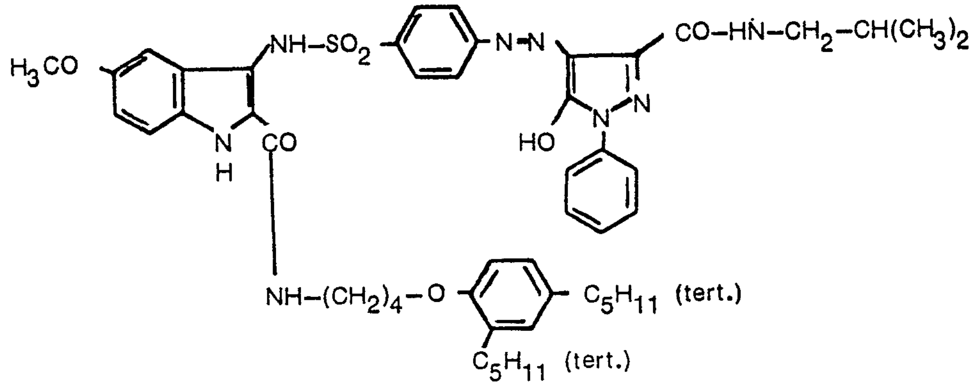

(M)

Beispiel 2

Bestimmung von Absorptionsdaten und Lichtechtheit.

Testreifen einer Beizchicht, besthend aus 5 g Gelatine und 5,7 g eines Polyurethans aus 4,4'-Diphenyldiisocyanat, N-Äthyldiäthanolamin und Epichlorhydrin (gemäß Beispiel 1 der DE-OS 2 631 521) pro $m^2$ auf einem transparenten Träger aus Polyäthylenterephthalat wurden durch Eintauchen in eine 0,01 molare wäßrig alkalische Lösung der "abgespaltenen" Farbstoffe eingetaucht, bis eine Farbdichte von 1—1,5 erreicht war. Anschließend wurden die Teststreifen 10 Min. gewässert und getrocknet.

Als "abgespaltene" Farbstoffe werden dabei Farbstoffe bezeichnet, die anstelle des ursprünglich vorhandenen oxidierbaren Trägerrestes nur ein kleines Bruchstück davon, gegebenenfalls über ein Bindeglied X tragen, im vorliegenden Fall eine $—SO_2—NH_2—$ Gruppe.

Ein Teil des Testreifens wurde zur Aufnahme des Absorptionsspektrums verwendet. Neben dem Absorptionsmaximum in nm wird die Halbbandbreite (HBB) angegeben; dies ist die Breite der Absorptionskurve in nm, gemessen auf halber Höhe des Absorptionsmaximums.

Ein anderer Teil des Teststreifens wurde in einem Xenotest gerät 24 Stunden belichtet, entsprechend einer Gesamtbelichtung mit $3{,}5.10^6$ Lux.h.Aus dem Farbdichtewerten Do vor der Belichtung und D nach der Belichtung wurden die Prozent Restdichte als Maß für die Lichtechtheit (LE) berechnet nach

$$\frac{D}{D_o} . 100 = \% \text{ Restdichte}$$

TABELLE

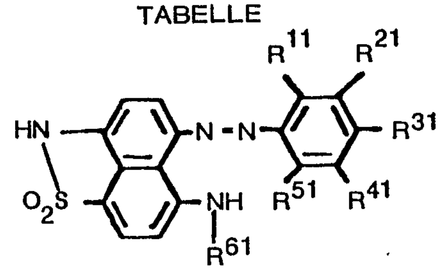

| Nr. | $R^{11}$ | $R^{21}$ | $R^{31}$ | $R^{41}$ | $R^{51}$ | $R^{61}$ | λmax /HBB (nm) | LE Restdichte (%) |
|---|---|---|---|---|---|---|---|---|
| 1 | H | $SO_2NH_2$ | H | H | H | $-COCH_3$ | 538/99 | 50 |
| 2 | H | 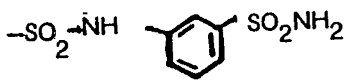 | H | H | H | $-COCH_3$ | 540/95 | 70 |
| 3 | H | H | $-SO_2NH_2$ | H | H | $-COCH_3$ | 540/110 | 69 |
| 4 | H | $-SO_2NH_2$ | $-CH_2$ | H | H | $-COCH_3$ | 539/90 | 40 |
| 5 | $-OCH_3$ | H | H | $-SO_2NH_2$ | H | $-COCH_3$ | 547/100 | 45 |
| 6 | $-Cl$ | H | H | $-SO_2NH_2$ | H | $-COCH_3$ | 545/102 | 62 |
| 7 | H | $-SO_2NH_2$ | $-OCH_3$ | H | H | $-COCH_3$ | 535/96 | 45 |
| 8 | $-CH_3$ | H | H | $-SO_2NH_2$ | H | $-COCH_3$ | 540/101 | 50 |
| 9 | $-CH_3$ | H | H | 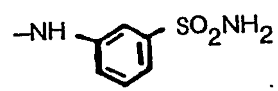 | H | $-COCH_3$ | 540/98 | 60 |
| 10 | $-CH_3$ | H | $-SO_2NH_2$ | H | H | $-COOH_3$ | 540/114 | 70 |
| 11 | $-CH_3$ | H | 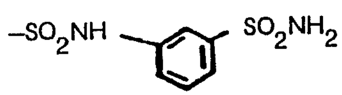 | H | H | $-COOH_3$ | 550/104 | 70 |

TABELLE (Fortsetzung)

| Nr. | $R^{11}$ | $R^{21}$ | $R^{31}$ | $R^{41}$ | $R^{51}$ | $R^{61}$ | λmax /HBB (nm) | LE Restdichte (%) |
|---|---|---|---|---|---|---|---|---|
| 12 | $-CH_3$ | H | $-SO_2NH_2$ | H | Cl | $-COCH_3$ | 523/102 | 85 |
| 13 | $-CH_3$ | H | $-SO_2-NH-$ 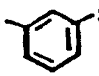 $SO_2NH_2$ | H | Cl | $-COCH_3$ | 522/103 | 90 |
| 14 | $-CH_3$ | H | $-CH_3$ | $-SO_2NH_2$ | H | $-COCH_3$ | 538/99 | 42 |
| 15 | $-CH_3$ | H | $-CH_3$ | $-SO_2-NH-$ 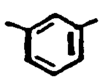 $SO_2NH_2$ | H | $-COCH_3$ | 538/98 | 53 |
| 16 | H | $-CH_3$ | $-SO_2NH_2$ | H | H | $-COCH_3$ | 547/102 | 60 |
| 17 | H | $-CH_3$ | $-SO_2NH$ 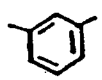 $SO_2NH_2$ | H | H | $-COCH_3$ | 547/100 | 70 |
| 18 | $-Cl$ | H | $-SO_2NH$ 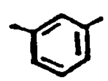 $SO_2NH_2$ | H | H | $-COCH_3$ | 564/110 | – |
| 19 | H | $-SO_2NH_2$ | Cl | H | H | $-COCH_3$ | 552/91 | 60 |
| 20 | H | $-SO_2NH$ 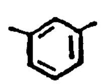 $SO_2NH_2$ | Cl | H | H | $-COCH_3$ | 550/98 | 62 |
| 21 | H | $-SO_2NH_2$ | H | H | H | $-COOC_2H_5$ | 532/103 | 55 |
| 22 | H | $-SO_2NH_2$ | H | H | H | $-COC(CH_3)_3$ | 536/96 | 67 |
| 23 | H | H | $-SO_2NH_2$ | H | H | $-COC(CH_3)_3$ | 545/104 | 75 |

TABELLE (Fortsetzung)

| Nr. | $R^{11}$ | $R^{21}$ | $R^{31}$ | $R^{41}$ | $R^{51}$ | $R^{61}$ | λmax /HBB (nm) | LE Restdichte (%) |
|---|---|---|---|---|---|---|---|---|
| 24 | H | Cl | H | H | H | 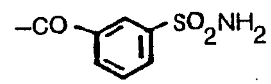 | 538/98 | 35 |
| 25 | Cl | H | H | H | H | 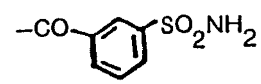 | 540/102 | 35 |
| 26 | Cl | H | Cl | H | H | 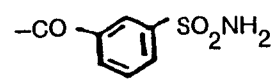 | 547/115 | 50 |
| 27 | H | 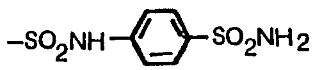 | H | H | H | $-CO-CH_3$ | 540/94 | 65 |
| 28 | H | 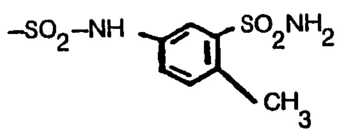 | H | H | H | $-CO-CH_3$ | 540/94 | 65 |
| 29 | H | 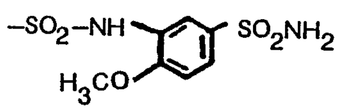 | H | H | H | $-CO-CH_3$ | 540/95 | 70 |
| 30 | H | $-SO_2NH_2$ | H | H | H | $-SO_2-CH_3$ | 542/96 | 55 |
| 31 | H | H | $-SO_2NH_2$ | H | H | $-SO_2-CH_3$ | 545/108 | 67 |
| 32 | H | 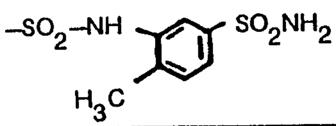 | H | H | H | $-COCH_3$ | 543/95 | 63 |

TABELLE (Fortsetzung)

| Nr. | $R^{11}$ | $R^{21}$ | $R^{31}$ | $R^{41}$ | $R^{51}$ | $R^{61}$ | λmax /HBB (nm) | LE Restdichte (%) |
|---|---|---|---|---|---|---|---|---|
| 33 | H | 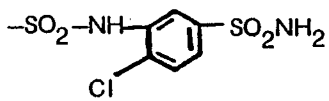 | H | H | H | $-COCH_3$ | 538/93 | 61 |
| 34 | H | 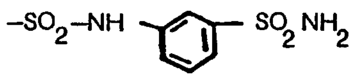 | H | H | H | $-COOC_2H_5$ | 536/98 | 70 |
| 35 | H | 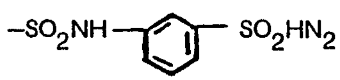 | H | H | H | $-COC(CH_3)_3$ | 533/94 | 80 |
| 36 | H | 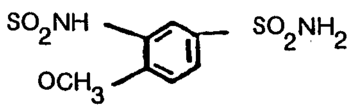 | H | H | H | $-COOC_2H_5$ | 536/98 | 65 |
| 37 | H | $-SO_2NH_2$ | H | H | H | $-COCH_2-NH-SO_2CH_3$ | 543/98 | 55 |
| 38 | H | $-SO_2NH_2$ | $-OCH_3$ | H | H | $-COOC_2H_5$ | 527/101 | 75 |
| 39 | H | 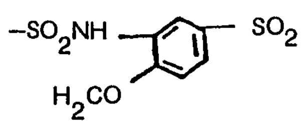 | H | H | H | $-CO-C(CH_3)_3$ | 539/95 | 75 |
| 40 | H | 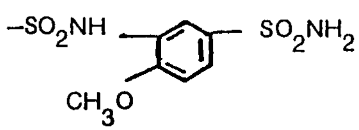 | $-OCH_3$ | H | H | $-COOC_2H_5$ | 530/100 | 75 |
| 41 | H | $-SO_2NH_2$ | H | H | H | $-COCH_2-OC_2H_5$ | 539/94 | 45 |

TABELLE (Fortsetzung)

| Nr. | $R^{11}$ | $R^{21}$ | $R^{31}$ | $R^{41}$ | $R^{51}$ | $R^{61}$ | λmax /HBB (nm) | LE Restdichte (%) |
|---|---|---|---|---|---|---|---|---|
| 42 | $-SO_2NH_2$ | H | H | H | H | $-COOH_3$ | 530/106 | 45 |
| 43 | H | 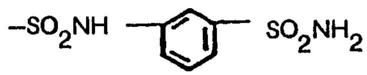 | H | H | H | $-COO-CH_2-OC_2H_5$ | 540/94 | 65 |
| 44 | H | $-SO_2NH_2$ | H | H | H | $-COOCH_3$ | 535/100 | 50 |
| 45 | H | 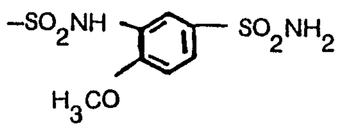 | $-CH_3$ | H | H | $-COCH_3$ | 540/93 | 55 |
| 46 | H | 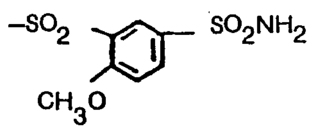 | H | H | H | $-COCH_2-OC_2H_5$ | 539/96 | 65 |
| 47 | H | 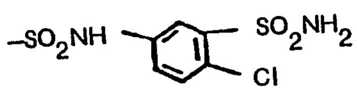 | H | H | H | $-COCH_3$ | 538/94 | 55 |
| 48 | H | 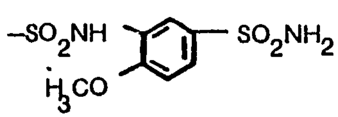 | H | H | H | $-COOCH_3$ | 541/97 | 58 |
| 49 | H | 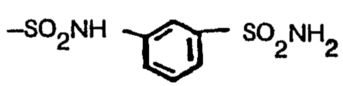 | H | H | H | $-COOCH_3$ | 540/97 | 60 |

TABELLE (Fortsetzung)

| Nr. | $R^{11}$ | $R^{21}$ | $R^{31}$ | $R^{41}$ | $R^{51}$ | $R^{61}$ | λmax /HBB (nm) | LE Restdichte (%) |
|---|---|---|---|---|---|---|---|---|
| 50 | H | 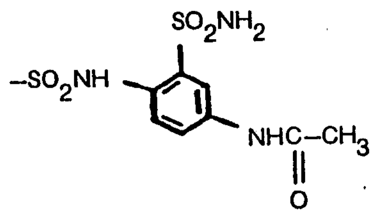 | H | H | H | 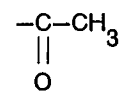 | 537/102 | 63 |
| 51 | H | 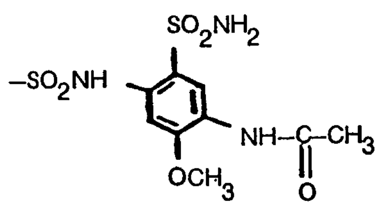 | H | H | H | 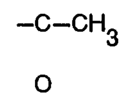 | 540/98 | 61 |
| 52 | H | 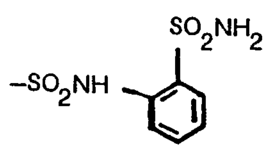 | H | H | H | 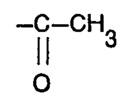 | 538/100 | 59 |
| 53 | H | $-SO_2-NH-CH_2-CH_2-SO_2-NH_2$ | H | H | H | $-COOC_2H_5$ | 534/402 | 66 |

TABELLE (Fortsetzung)

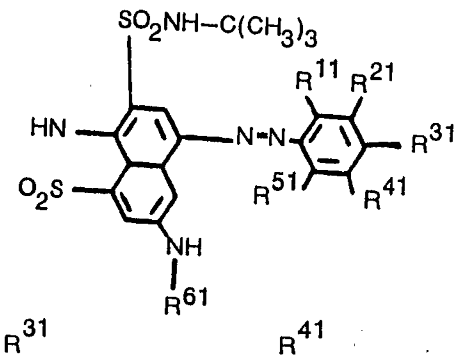

| Nr. | $R^{11}$ | $R^{21}$ | $R^{31}$ | $R^{41}$ | $R^{51}$ | $R^{61}$ | λmax /HBB (nm) | LE Restdichte (%) |
|---|---|---|---|---|---|---|---|---|
| 54 | H | H | $-SO_2NH_2$ | H | H | $COCH_3$ | 530/99 | 45 |
| 55 | H | $-SO_2NH_2$ | H | H | Cl | $COCH_3$ | 539/100 | 45 |
| 56 | H | H | $-SO_2NH_2$ | H | H | $SO_2CH_3$ | 545/95 | 45 |

Beispiel 3

Wie in Beispiel 2 beschrieben, wurden die spektralen Eigenschaften und die Lichtechtheit der aus farbgebenden Verbindungen 7 und 8 "abgespaltenen" Farbstoffe ermittelt. Zum Vergleich wurde ein "abgespaltener" Farbstoff gemäß DT-OS 406 653 herangezogen.

Vergleichfarbstoff:

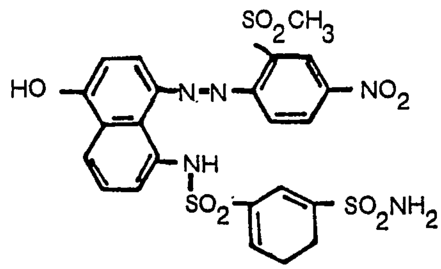

Die Ergebnisse sind in der folgenden Tabelle niedergelegt:

Tabelle

| "abgespaltener" Farbstoff aus | λmax/HBB [nm] | LE Restdichte [%] |
|---|---|---|
| Verb. 7 | 650/120 | 75 |
| Verb. 8 | 660/105 | 65 |
| Vergleich | 645/100 | 25 |

**Patentanspruch**

Fotografisches Farbdiffusionsübertragungsverfahren zur Herstellung farbiger Bilder, bei dem ein fotografisches Material mit mindestens einer lichtempfindlichen Silberhalogenidemulsionsschicht und einer dieser zugeordneten nichtdiffundierenden farbgebenden Verbindung bildmäßig belichtet und mit einem Silberhalogenidentwicklungsmittel entwickelt wird, wobei durch das Entwickleralkali bildmäßig ein diffundierender Farbstoff aus der nichtdiffundierenden farbgebenden Verbindung abgespalten und auf eine Bildempfangsschicht übertragen wird, dadurch gekennzeichnet, daß als nichtdiffundierende farbgebende Verbindung eine Verbindung einer der folgenden Formeln I, II und III verwendet wird:

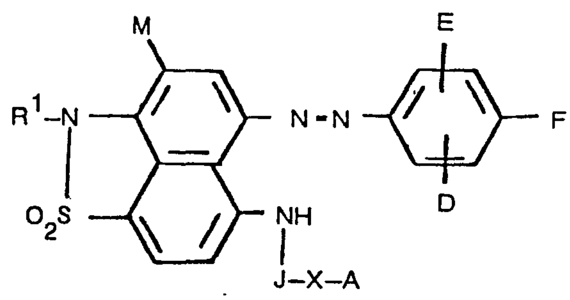

(I)

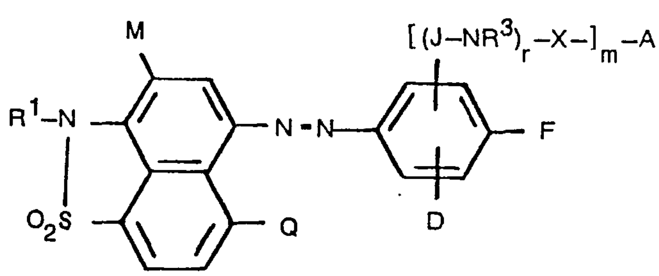

(II)

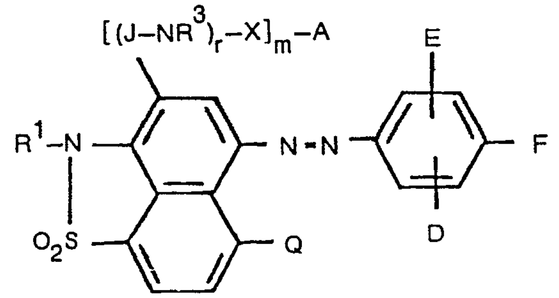

(III)

worin bedeuten:

A einen gegebenenfalls über das Bindeglied X angeknüpften, einen diffusionsfestmachenden Rest enthaltenden oxidierbaren organischen Trägerrest, aus dem unter den alkalischen Bedingungen der fotografischen Entwicklung entweder in oxidierter Form oder in nicht-oxidierter Form ein Teil zusammen mit dem diffusionsfestmachenden Rest abgespalten wird unter gleichzeitiger bildmäßiger Freisetzung eines diffundierenden Azofarbstoffes;

M Wasserstoff, Halogen, Alkylsulfonyl, Arylsulfonyl oder Sulfamoyl;

Q Acylamino, wobei der Acylrest sich ableitet von aliphatischen oder aromatischen Carbon- oder Sulfonsäuren, einschließlich Kohlensäuremonoalkylestern und Carbaminsäuren;

$R^1$ Wasserstoff oder einen hydrolysierbaren Rest einer der Formeln —CO—$R^2$ oder —CO—$OR^2$;

$R^2$ Alkyl mit 1 bis 18 C-Atomen oder Phenyl;

D, E gleich oder verschieden, Wasserstoff, Halogen, Cyan, Nitro, Trifluormethyl, Alkyl, Alkoxy, Sulfamoyl;

F Wasserstoff, Alkyl, Alkoxy, Halogen, Nitro, Sulfamoyl;

J —$SO_2$— oder —CO—;

$R^3$ Wasserstoff oder Alkyl mit 1 bis 6 C-Atomen;

X ein bivalentes Bindeglied der Formel —$R^4$—$(L)_p$—$(R^4)_q$—, worin $R^4$ einen Alkylenrest mit 1 bis 6 C-Atomen oder einen gegebenenfalls substituierten Phenylrest bedeutet und wobei die beiden Reste $R^4$ die gleiche oder eine verschiedene Bedeutung haben können;

L —O—, —CO—, —$CONR^5$—, —$SO_2$—$NR^5$—, —$SO_2$—, —SO—, —S—, ($R^5$ = H oder Alkyl);

m, p, q, r jeweils 0 oder 1; q = 1, wenn p = 1.

**Revendication**

Procédé photographique de transfert des colorants par diffusion pour la production d'images en couleur, dans lequel on expose suivant une image un matériau photographique comportant au moins une couche d'émulsion d'halogénure d'argent sensible à la lumière en un composé chromogène non diffusible associé à celle-ci et on le développe au moyen d'un agent développateur de l'halogénure d'argent, un colorant diffusible étant libéré suivant l'image dans les conditions du développement alcalin à partir du composé chromogène non diffusible et transféré sur la couche réceptrice d'image, caractérisé en ce que l'on utilise comme composé chromogène non diffusible un composé répondant à l'une des formules I, II et III suivantes:

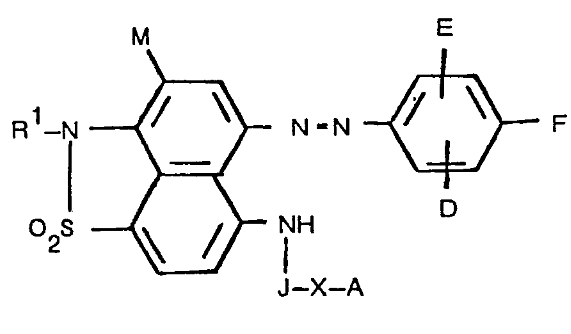

(I)

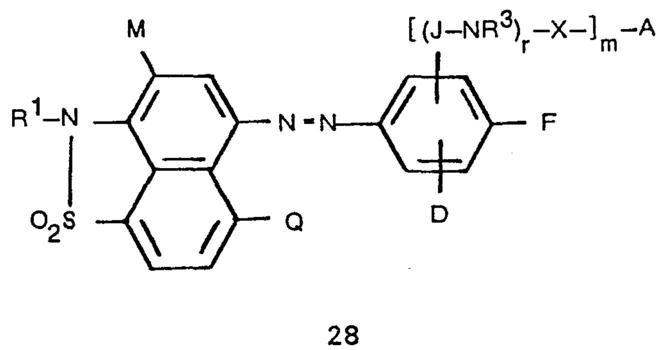

(II)

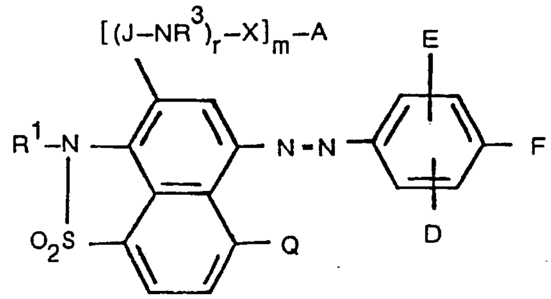

(III)

dans lesquelles:

A représente un reste de support organique oxydable, éventuellement lié par l'intermédiaire du groupement de liaison X, contenant un reste conférant la résistance à la diffusion, et dont au moins une partie, soit sous forme oxydée, soit sous forme non oxydée, est éliminée conjointement avec le reste conférant la résistance à la diffusion dans les conditions alcalines du développment photographique avec libération simultanée suivant l'image d'un colorant azoïque diffusible;

M représente l'hydrogène, un halogène ou un reste alylsulfonyle, arylsulfonyle ou sulfamoyle;

Q représente un reste acylamino dont le reste acyle dérive d'acides carboxyliques ou sulfoniques aliphatiques ou aromatiques, y compris les monoesters d'acide carbonique, les acides carbamiques et les acides sulfamiques;

$R^1$ représente l'hydrogène ou un reste hydrolysable de formule —CO—$R^2$ ou —CO—$OR^2$;

$R^2$ représente un groupe alkyl en $C_1$—$C_{18}$ ou phényle;

D et E, identiques ou différents, représentent l'hydrogène, un halogène ou un groupe cyano, nitro, trifluorométhyle, alkyle, alcoxy, sulfamoyle;

F représente l'hydrogène, un groupe alkyle, un groupe alcoxy, un halogène, un groupe sulfamoyle;

J représente —$SO_2$— ou —CO—;

$R^3$ représente l'hydrogène ou un groupe alkyle en $C_1$—$C_6$;

X représente un groupement de liaison divalent de formule —$R^4$—$(L)_p$—$(R^4)_q$— dans laquelle $R^4$ représente un reste alkylène en $C_1$—$C_6$ ou un reste phénylène éventuellement substitué et les deux restes $R^4$ peuvent avoir la même signification ou une signification différente;

L représente —O—, —CO—, —CO—$NR^5$—, —$SO_2$—$NR^5$—, —$SO_2$—, —SO—, —S—, ($R^5$ = H ou alkyle);

m, q, p, r représentent chacun 0 ou 1; q = 1 lorsque p = 1.

## Claims

1. A photographic dye diffusion transfer process for the production of coloured images, in which a photographic material comprising at least one photosensitive silver halide emulsion layer and, associated therewith, a non-diffusible dye-providing compound is exposed imagewise and developed with a silver halide developer, a diffusible dye being released imagewise from the non-diffusible dye-providing compound by the developer alkali and being transferred to an image-receiving layer, characterised in that the non-diffusible dye-providing compound used is a compound of one of the following formulae I, II and III:

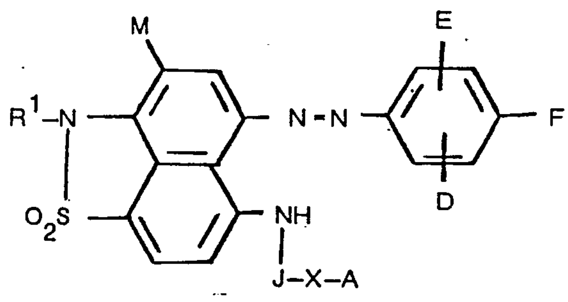

(I)

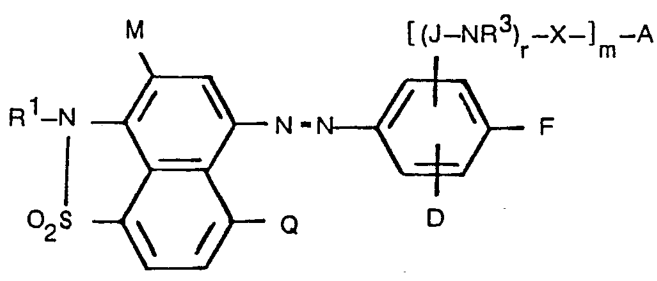

(II)

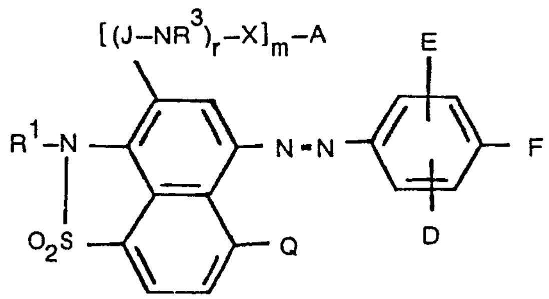

(III)

in which

A represents an oxidisable organic carrier radical optionally attached through a binding member X and containing a diffusion-preventing radical from which at least a part is split off in oxidised form or in non-oxidised form together with the diffusion-preventing radical under the alkaline photographic development conditions, accompanied by the imagewise release of a diffusible azo dye;

M represents hydrogen, halogen, alkyl sulphonyl, aryl sulphonyl or sulphamoyl;

Q represents acylamino, the acyl radical being derived from aliphatic or aromatic carboxylic or sulphonic acids, including carbonic acid monoalkyl esters and carbamic acids;

$R^1$ represents hydrogen or a hydrolysable radical of one of the formulae —CO—$R^2$ or —CO—$OR^2$;

$R^2$ represents alkyl containing 1 to 18 carbon atoms or phenyl;

D, E are the same or different and represent hydrogen, halogen, cyano, nitro, trifluoromethyl, alkyl, alkoxy or sulphamoyl;

F represents hydrogen, alkyl, alkoxy, halogen, nitro or sulphamoyl;

J represents —$SO_2$— or —CO—;

$R^3$ represents hydrogen or alkyl containing 1 to 6 carbon atoms;

X represents a divalent connecting link of the formula —$R^4$—$(L)_p$—$(R^4)_q$ wherein $R^4$ is an alkylene radical containing 1 to 6 carbon atoms or an optionally substituted phenylene radical, it being possible for the two radicals $R^4$ to have the same or different meanings;

L represents —O—, —CO—, —$CONR^5$—, —$SO_2$—$NR^5$—, —$SO_2$—, —SO— or —S— ($R^5$ = H or alkyl);

m, p, q, r in each case = 0 or 1; q = 1, when p = 1.